# EUROPÄISCHE PATENTSCHRIFT

(11) **EP 2 658 797 B1**
(45) Veröffentlichungstag und Bekanntmachung des Hinweises auf die Patenterteilung: **08.06.2016**
(21) Anmeldenummer: 11801543.7
(22) Anmeldetag: 19.12.2011
(51) Int. Cl.: B65G 17/38, F16G 13/10

(54) **FÖRDERKETTE FÜR EINE FÖRDEREINRICHTUNG**
CONVEYING CHAIN FOR A CONVEYING DEVICE
CHAÎNE DE TRANSPORT POUR DISPOSITIF DE TRANSPORT

(30) Priorität: 27.12.2010 CH 21802010
(43) Veröffentlichungstag der Anmeldung: 06.11.2013
(73) Patentinhaber: Ferag AG, 8340 Hinwil (CH)
(72) Erfinder: STUDER, Beat, CH-8340 Hinwil (CH)
(74) Vertreter: Frei Patent Attorneys
(86) Internationale Anmeldenummer: PCT/CH2011/000302
(87) Internationale Veröffentlichungsnummer: WO 2012/088615

(56) Entgegenhaltungen:
- EP-A1- 1 932 781
- FR-A1- 2 252 268
- FR-A1- 2 319 818
- FR-A1- 2 564 810
- FR-A1- 2 846 642
- US-A- 4 220 052
- US-A- 4 353 459
- US-A1- 2008 132 369

## Beschreibung

Die Erfindung betrifft ein Kettenglied einer Förderkette, enthaltend einen Grundkörper mit einem ersten Endbereich, welcher einen ersten Kupplungsabschnitt zur gelenkigen Verbindung mit einem Kupplungsabschnitt eines ersten, benachbarten Kettengliedes umfasst, und mit einem zweiten Endbereich, welcher einen zweiten Kupplungsabschnitt zur gelenkigen Verbindung mit einem Kupplungsabschnitt eines zweiten, benachbarten Kettengliedes umfasst. Ferner betrifft die Erfindung eine, aus solchen Kettengliedern gebildete Förderkette sowie den Grundkörper eines solchen Kettengliedes.

In der Fördertechnik werden Förderketten eingesetzt, an welchen Förderorgane, wie zum Beispiel Greifer oder Plattenelemente, zum Fördern von Gegenständen, wie Druckereiprodukte, angebracht sind. Die Förderketten werden hierzu über Längsführungseinrichtungen einer Förderanlage entlang einer Umlaufbahn geführt.

Solche Förderketten sind in der Regel aus gelenkig miteinander verbundenen Kettengliedern aufgebaut. Die FR 2 232 497 beschreibt beispielsweise eine bekannte Ausführungsform einer solchen Förderkette. Die Förderkette besteht in diesem Beispiel aus einer Mehrzahl von Kettengliedern, welche jeweils an einem ersten Endbereich einen ersten Kupplungsabschnitt und an einem zweiten Endbereich einen zweiten Kupplungsabschnitt aufweisen. Beide Kupplungsabschnitte enthalten quer zur Längsrichtung der Förderkette angeordnete Durchlässe. Der zweite Kupplungsabschnitt ist gabelförmig ausgestaltet. Die Kettenglieder werden miteinander zu einer Förderkette verbunden, indem der erste Kupplungsabschnitt zwischen die Gabellaschen des zweiten Kupplungsabschnittes eines benachbarten Kettengliedes eingeführt wird. Nachfolgend wird eine Verbindungsachse durch den Durchlass am ersten Kupplungsabschnitt und an den Gabellaschen des zweiten Kupplungsabschnittes geführt und mit drehbar gelagerten Laufrollen verbunden. Die vorliegende Konstruktion der Gelenkverbindung weist den Nachteil auf, dass die Kettenglieder lediglich um eine durch die Verbindungsachse ausgebildete Schwenkachse, d.h. in einer Ebene senkrecht zur Verbindungsachse schwenkbar sind. Eine Schwenkbarkeit quer dazu, d.h. aus dieser Ebene heraus, ist nicht vorgesehen.

Diese beschränkte Schwenkbarkeit der Kettenglieder wirkt sich limitierend auf die Ausgestaltung der Längsführungseinrichtung und der dazugehörigen Förderbahn aus, entlang welcher die Förderkette geführt wird. Eine begrenzte Auslenkung der Förderkette aus der genannten Ebene ist nur dann möglich, wenn die Gelenkverbindung Spiel aufweist. Nichtsdestotrotz führt eine solche Konstruktion zu einem erhöhten Verschleiss der Kettenglieder, insbesondere im Bereich der Gelenkverbindungen.

Um das oben geschilderte Problem der eingeschränkten Schwenkbarkeit zu umgehen, wird in der Schrift DE 26 29 528 eine Kugelgelenk-Gliederkette vorgeschlagen. Die Schwenkbarkeit aus der senkrecht zur Gelenkachse liegenden Ebene wird durch eine Gelenkverbindung erreicht, bei welcher der in Form eines Kugelsegmentes ausgebildete Gelenkkörper eines ersten Kettengliedes in eine gegengleich ausgebildete Gelenkpfanne eines benachbarten, zweiten Kettengliedes eingreift und mit dieser eine Art Kugelgelenkverbindung ausbildet. Der Gelenkkörper ist fest auf einer Schwenkachse, die senkrecht zur Längsrichtung des Kettengliedes verläuft, angeordnet. Auf diese Weise können die Kettenglieder ebenfalls in einer Ebene, die senkrecht zur besagten Schwenkachse ausgerichtet ist, geschwenkt werden. Ferner erlaubt die Gelenkverbindung auch eine Schwenkbewegung in einer Ebene, welche durch die Längsrichtung der Verbindungselemente und die Schwenkachse definiert ist. Überdies können die Gelenkglieder um die Längsrichtung des Kettengliedes gegeneinander gedreht (verwunden) werden.

Auch die Schrift EP 1 832 532 A2 offenbart eine Art Kugel-Gelenkgliederkette, deren Kettenglieder Gelenklager ausbilden. Die Gelenklager umfassen zweiteilige Lagergehäuse, welche eine Lagerpfanne für einen Lagerkörper ausbilden. Die Lagerpfanne umschliesst dabei einen Gelenkkörper fest. Zwischen den beiden Lagergehäuseteilen wird eine Trennebene ausgebildet, welche einer senkrecht zur Gehäuseachse ausgerichteten Mittelebene entspricht. Die beschriebene Gelenkverbindung erlaubt auch hier zusätzlich eine Bewegung senkrecht zur genannten Mittelebene.

Die in den beiden Schriften DE 26 29 528 und EP 1 832 532 A2 beschriebenen Ausführungsformen von Kugel-Gelenkgliederketten sind jedoch mit dem Nachteil behaftet, dass bei einer Schwenkbewegung jeweils Bauteile, insbesondere Gelenkpfanne und Gelenkkörper gegeneinander gleiten. Dies führt längerfristig zu erhöhtem Verschleiss durch Abrieb. Eine Auswechslung der Kugelgelenk-Gliederketten ist jedoch ziemlich aufwändig. Ferner werden die Gelenkpfanne und der Gelenkkörper durch die zum Teil hohen Belastungsspitzen, welche beispielsweise infolge eines Notstopps auftreten, stark beansprucht.

Die Veröffentlichungsschrift FR 2 564 810 A1 beschreibt eine Förderkette aus einer Mehrzahl von Kettengliedern aus Kunststoff, welche über Verbindungsachsen gelenkig miteinander zur Förderkette verbunden sind.

Die Veröffentlichungsschrift US 2008/0132369 A1 beschreibt eine gattungsgemäße Antriebskette mit einer Mehrzahl von Verbindungsplatten, welche über Steckachsen gelenkig miteinander zur Antriebskette verbunden sind. Die Antriebskette enthält Dämpfungselemente, welche mit Spiel seitlich auf den Steckachsen angebracht sind. Die Antriebskette ist über die Dämpfungselemente im Eingriff mit einer Antriebsverzahnung.

Es ist daher Aufgabe vorliegender Erfindung, eine gattungsgemässe Förderkette aus Kettengliedern zu schaffen, welche an ihren Kupplungsabschnitten um eine Schwenkachse schwenkbar sind, welche senkrecht zur Längsachse des Kettengliedes bzw. der Förderkette angeordnet ist. Ferner soll die Förderkette auch in einer Ebene, welche durch die Längsrichtung der Kettenglieder und die Schwenkachse aufgespannt wird schwenkbar sein. Der Betrieb der Förderkette soll trotz der Schwenkbarkeit in verschiedenen Richtungen verschleissarm sein und so eine lange Nutzungsdauer mit vergleichsweise geringem Unterhaltsaufwand garantieren.

Die Aufgabe wird durch ein Kettenglied nach Anspruch 1, eine Förderkette nach Anspruch 13 und einen Kettenglied-Grundkörper nach Anspruch 16 gelöst. Die abhängigen Ansprüche stellen bevorzugte Weiterbildungen der Erfindung bzw. besondere Ausführungsformen der Erfindung dar. Grundsätzlich gelten die im Zusammenhang mit dem Kettenglied-Grundkörper beschriebenen Merkmale auch für die darauf aufbauenden Kettenglieder und Förderketten und umgekehrt.

Der Ketten-Gliedgrundkörper weist also einen zwischen den beiden Endbereichen liegenden Zwischenbereich auf, welcher einen elastisch verformbaren Körperabschnitt, insbesondere einen biegeelastischen Körperabschnitt, umfasst. Der elastisch verformbare Körperabschnitt ist bevorzugt so ausgestaltet ist, dass die Lage des ersten Endbereichs relativ zum zweiten Endbereich durch eine elastische Verformung des Körperabschnittes veränderbar ist.

Diese veränderbare Lage zeichnet sich erfindungsgemäss dadurch aus, dass der besagte Körperabschnitt elastisch biegbar und/oder elastisch tordierbar ausgebildet ist. D.h., der erste Endbereich des Grundkörpers ist relativ zum zweiten Endbereich aus der Längsrichtung L des Grundkörpers elastisch biegbar und/oder um die Längsrichtung L des Grundkörpers elastisch tordierbar.

Die besagte Biegbarkeit ist bevorzugt mindestens in jener Ebene vorgesehen, welche durch die Längsrichtung L des Kettengliedes bzw. des Grundkörpers und die Schwenkachse A der Kettenglieder relativ zueinander aufgespannt wird.

Die veränderbare Lage kann sich alternativ oder zusätzlich zu den oben genannten Lageveränderungen auch durch ein Dämpfungsvermögen des Körperabschnittes auszeichnen. Das heisst, durch einen in einem Zwischenbereich des Grundkörpers angeordneten, elastisch verformbaren Körperabschnitt wird eine Dämpfung innerhalb des Kettengliedes erreicht.

In diesem Fall sind die Lageveränderungen im Vergleich zu einer Durchbiegung vergleichsweise gering. Auf diese Weise werden z. B. auf einen Endbereich einwirkende Schwingungen oder Stösse nicht ungedämpft auf den restlichen Grundkörper, insbesondere auf den anderen Endbereich, übertragen. Der elastisch verformbare Körperabschnitt kann z. B. zur Aufnahme von Schwingungen oder Stösse in Längsrichtung L und/oder quer zur Längsrichtung L des Kettengliedes ausgelegt sein.

So kann z. B. der elastisch verformbare Körperabschnitt so ausgelegt sein, dass der erste und zweite Endbereich zusätzlich oder alternativ zu den oben genannten Lageveränderungen in Längsrichtung L relativ zueinander verschiebbar sind. Auf diese Weise werden betriebsbedingte Schwingungen und Stösse innerhalb der Förderkette eliminiert oder zumindest gedämpft und der hierdurch entstehende Körperschall reduziert. Eine derart ausgelegte Förderkette zeichnet sich durch eine hohe Laufruhe und entsprechend geringen Lärmemissionen aus. Der Aspekt eines elastisch verformbaren Körperabschnittes zwecks Erhöhung der Laufruhe soll als unabhängige Erfindung betrachtet werden.

Der elastisch verformbare Körperabschnitt enthält bevorzugt mindestens einen oder mehrere der folgenden Werkstoffe oder besteht daraus:
- einen Kunststoffwerkstoff, insbesondere ein Elastomer;
- einen Federstahlwerkstoff;
- einen faserverstärkter Kunststoff.

Das Elastomer kann z. B. aus Naturkautschuk oder ein synthetisch hergestelltes Elastomer sein. Die Fasern eines faserverstärkten Kunststoffwerkstoffs sind bevorzugt Glasfasern. Es können jedoch auch andere organische oder anorganische Fasern oder Gemische verschiedener Fasertypen, wie z. B. Kohlefasern, eingesetzt werden. Die Fasern können Lang- oder Kurzfasern oder ein Gemisch davon sein. Die Fasern sind bevorzugt Kurzfasern mit einer Länge von z. B. 3 bis 20 mm. Diese können zum Beispiel in die Kunststoffmatrix eingestreut sein. Die Fasern können gerichtet oder ungerichtet sein. Die Fasern können insbesondere in Richtung der Längsachse des Kettengliedes gerichtet sein. Die Fasern können einzeln oder in Form eines textilen Flächengebildes in die Kunststoffmatrix eingebracht sein. Der Faseranteil kann z. B. 20 bis 60 Vol.-% (Volumenprozent) betragen. Der Kunststoff der faserverstärkten Struktur ist bevorzugt ein Thermoplast oder Duroplast. Die Fasern tragen zur Zug- und Biegefestigkeit des Kettengliedes im Körperabschnitt bei und erlauben daher dünne Wanddicken bei der Ausgestaltung des biegeelastischen Körperabschnittes.

Der elastisch verformbare Körperabschnitt enthält bevorzugt ein Zugelement zur Aufnahme von Zugspannungen. Das Zugelement ist bevorzugt ein sich vom ersten Endbereich durch den Zwischenbereich zum zweiten Endbereich hin erstreckendes und insbesondere in die beiden Endbereiche integriertes Längselement. Das Zugelement kann selbst elastisch verformbar, insbesondere biegeelastisch, ausgebildet sein.

Ist das Zugelement elastisch verformbar ausgebildet, so kann der elastisch verformbare Körperabschnitt auch aus einem solchen Zugelement bestehen. Das Zugelement kann flächenförmig, z. B. als Blech, Platte oder Streifen ausgebildet sein. Das Zugelement kann auch in Form einer Sehne bzw. Seil vorliegen. Das Zugelement ist bevorzugt aus Metall, insbesondere aus Stahl. Das Zugelement besteht besonders bevorzugt aus einem Federstahlelement. Das Zugelement kann jedoch auch aus einem Kunststoffwerkstoff bestehen.

In einer bevorzugten Ausführungsform eines solchen Kettengliedes bzw. Grundkörpers weist der elastisch verformbare Körperabschnitt eine rippenartige Struktur mit Querrippen auf, wobei die Querrippen quer zur Längsachse L verlaufen. Der rippenartig strukturierte Körperabschnitt kann aus einem Werkstoff, vornehmlich einem Kunststoffwerkstoff, oder mehreren Werkstoffen bestehen, wobei wenigstens ein Werkstoff bevorzugt ein Kunststoffwerkstoff ist.

Der elastisch verformbare Körperabschnitt kann auch als flächiger und insbesondere dünnwandiger Körperabschnitt ausgebildet sein. Der flächige Körperabschnitt kann z. B. laschenförmig ausgebildet sein. Der Körperabschnitt ist mit seinen Flächenseiten bevorzugt parallel zu einer Mittelebene des Kettengliedes ausgerichtet. Die Wanddicke kann z. B. 1 bis 5 mm, insbesondere 1 bis 3 mm betragen.

Dünnwandig bedeutet insbesondere, dass das Verhältnis von Wanddicke zur Höhe des Körperabschnittes wenigstens 1:3, vorzugsweise wenigstens 1:5 und insbesondere wenigstens 1:6 beträgt. Ferner ist die Wanddicke des Körperabschnittes bevorzugt wesentlich geringer als die Breite der beiden Kupplungsabschnitte. Das Verhältnis der Wanddicke zur Breite der beiden Kupplungsabschnitte kann z. B. wenigstens 1:3, vorzugsweise wenigstens 1:4 betragen.

Die Wanddicke nimmt vom Körperabschnitt zu den beiden Endbereichen hin jeweils kontinuierlich zu. Sprunghafte Änderungen in den Wanddicken, welche Spannungsspitzen erzeugen, werden auf diese Weise umgangen. Diese Ausführungsform ist besonders gut geeignet für biegeelastische Körperabschnitte aus faserverstärktem Kunststoff.

Der elastisch verformbare Körperabschnitt kann gemäss einer Weiterbildung der Erfindung in Längsrichtung des Kettengliedes mehrschichtig ausgebildet sein. Hierzu sind bevorzugt in abwechselnder Folge elastisch verformbare, insbesondere biegeelastische, Segmente und starren bzw. gegenüber den Segmenten weniger elastischen Zwischenelemente in Längsrichtung hintereinander angeordnet.

Die elastisch verformbaren Segmente sind bevorzugt aus einem Elastomer.

Die Zwischenelemente sind bevorzugt plattenförmige Elemente.

Die Zwischenelemente können zum Beispiel aus Metall oder Kunststoff sein.

Die Zwischenelemente können z. B. aus einen Stahl- oder Leichtmetallwerkstoff, wie Aluminium, sein.

Dank diesem schichtweisen Aufbau kann der Körperabschnitt höhere, in Längsrichtung des Kettenelementes wirkende Druckkräfte sowie Schubspannungen aufnehmen. Der schichtweise Aufbau aus Elastomer-Segmenten und starren Zwischenelementen wirkt bei Druckkräften in Längsrichtung des Grundkörpers einer Ausweichbewegung des elastischen Elastomer-Materials quer zur Druckbelastung entgegen.

Wie im Rahmen der Ausführungsbeispiele ausführlich beschrieben, kann der mehrschichtig aufgebaute Körperabschnitt eine rippenartige Struktur mit Querrippen aufweisen, wobei die Querrippen durch die starren Zwischenelemente ausgebildet werden. Ist ein zusätzliches Zugelement vorgesehen, so kann dieses mit den Zwischenelementen verbunden sein.

Die Körpersegmente sind mit den Zwischenelementen vorzugsweise stoffschlüssig verbunden.

Sie können jedoch alternativ zur vorgenannten Stoffschlussverbindung oder zusätzlich zu dieser auch durch ein, den elastisch verformbaren Körperabschnitt in Längsrichtung durchstossendes Bauteil zusammen gehalten sein.

Dieses Bauteil kann z. B. ein integriertes Zugelement sein, wie bereits an anderer Stelle beschrieben.

Gemäss einer weiteren bevorzugten Ausführungsform enthält der elastisch verformbare Körperabschnitt wenigstens ein sich in Längsrichtung L des Kettengliedes erstreckendes Element aus einem federelastischen Werkstoff. Das Element ist bevorzugt flächenförmig, insbesondere plattenförmig, ausgebildet.

Das Element kann als Streifen, z. B. als Blechstreifen ausgebildet sein. Das Element besteht besonders bevorzugt aus Federstahl.

Das federelastische Element ist mit seinen Endabschnitten zum ersten und zweiten Endbereich hin jeweils bevorzugt in den Grundkörper eingelassen bzw. in diesen integriert und mit diesem z. B. Form- und/oder stoffschlüssig verbunden. So kann das Element beispielsweise in einem Spritzgiessverfahren mit seinen jeweiligen Endabschnitten zum ersten und zweiten Endbereich hin in den Grundkörper eingegossen sein. Das federelastische Element ist bevorzugt bis in den ersten und/oder zweiten Kupplungsabschnitt hinein geführt.

Es ist auch möglich, dass das oben beschriebene federelastische Element mit einem Körperabschnitt aus einem Elastomer oder einen oben beschriebenen mehrschichtigen Körperabschnitt kombiniert wird. In diesem Fall ist das federelastische Element bevorzugt in einen Elastomerkörper oder in den mehrschichtigen Körperabschnitt integriert bzw. eingegossen, d.h. stoffschlüssig mit diesem verbunden.

Diese Kombination weist den Vorteil auf, dass das federelastische Element Zugkräfte aufnehmen kann, während Druckkräfte in den Elastomerkörper bzw. der mehrschichtige Körperabschnitt eingeleitet werden. Ein derartig aufgebauter, elastisch verformbarer Körperabschnitt kann in Längsrichtung L des Kettengliedes sowohl auf Zug als auch auf Druck beansprucht werden.

In einer bevorzugten Formgestaltung des elastisch verformbaren Körperabschnittes verjüngt sich dieser in Längsrichtung L des Kettengliedes vom ersten Endbereich in Richtung des zweiten Endbereichs. Es ist auch möglich, dass sich der Körperabschnitt in umgekehrter Richtung verjüngt.

In einer bevorzugten Ausbildung des Grundkörpers umfasst der zweite Endbereich einen gabelförmigen, zweiten Kupplungsabschnitt mit zwei voneinander beabstandeten Gabellaschen. Die Gabellaschen bilden eine Aufnahme für den Kupplungsabschnitt eines benachbarten Kettengliedes. Sind die Kettenglieder einer Förderkette bezüglich Gestalt baugleich, so bilden die Gabellaschen eine Aufnahme für den ersten Kupplungsabschnitt eines benachbarten Kettengliedes aus.

Wird der elastisch verformbare Körperabschnitt aus einem elastisch verformbaren, insbesondere biegelastischen, Element, z. B. aus Federstahl, gebildet, so kann der Körperabschnitt auch zwei sich in Längsrichtung L des Kettengliedes vom ersten Endbereich in Richtung des zweiten Endbereichs erstreckende federelastische Elemente aufweisen.

Die beiden federelastischen Elemente verlaufen im Zwischenbereich nebeneinander, vorzugsweise parallel nebeneinander.

Zum zweiten Endbereich hin laufen die beiden Elemente jedoch auseinander, z. B. V-förmig auseinander. Hierbei führt je ein federelastisches Element in eine Gabellasche. Das federelastische Element kann wie oben beschrieben ausgebildet sein.

Die beiden Kupplungsabschnitte weisen bevorzugt Durchlässe zur Aufnahme einer senkrecht zur Längsachse L ausgerichteten Gelenkachse auf. Der erste Kupplungsabschnitt weist zum Beispiel einen abgeflachten Kupplungskopf mit einem Durchlass auf.

In den Durchlass des ersten Kupplungsabschnittes kann eine Gleitbuchse eingelassen sein, welche als Führung für die Gelenkachse dient. Diese kann z. B. eingeschoben, eingegossen, eingeklebt oder eingepresst sein und mit dem ersten Kupplungsabschnitt eine reib- form- und/oder stoffschlüssige Verbindung eingehen. Die Gleitbuchse kann aus Metall oder Kunststoff bestehen.

Der zweite, gabelförmige Kupplungsabschnitt weist z. B. in jeder Gabellasche je einen, gemeinsam entlang einer gemeinsamen Schwenkachse A liegenden Durchlass auf. Die Schwenkachse A, welche eine geometrische Achse darstellt, liegt parallel zur Gelenkachse, welche eine physische Achse darstellt und zwecks Herstellung einer Gelenkverbindung durch die Durchlässe der Gabellaschen und des Kupplungskopfes geführt ist.

Sind die Kettenglieder der Förderkette bezüglich Formgebung gleich ausgestaltet, so wird zur Herstellung einer Gelenkverbindung der flache Gelenkkopf des ersten Kupplungsabschnittes eines ersten Kettengliedes zwischen die Gabellaschen des zweiten Kupplungsabschnittes eines benachbarten zweiten Kettengliedes geschoben und die Durchlässe der Gabellaschen und des Gelenkkopfes entlang einer gemeinsame Schwenkachse A ausgerichtet. Eine, die Durchlässe durchstossende Gelenkachse verbindet die beiden Kettenglieder.

Aussen seitlich von den Gabellaschen sind bevorzugt zwei Laufrollen drehbar an der Gelenkachse befestigt. Die Laufrollen sind seitlich bevorzugt von den Gabellaschen beabstandet. Zwischen den Laufrollen und den Gabellaschen sind in einem solchen Fall bevorzugt beidseitig Kraftübertragungselemente, wie Abstandshülsen, angeordnet, durch welche die Gelenkachse geführt ist. Die jeweils zwischen den Laufrollen und dem Grundkörper angeordneten Kraftübertragungselemente lassen sich auch bei anders ausgestalteten Kupplungsabschnitten anwenden.

Die Kraftübertragungselemente bewirken, dass die Kräfte eines Kippmomentes, welche auf die Schwenk- und Drehachse der Laufrollen einwirken, über die Kraftübertragungselemente auf den Grundkörper des Kettengliedes eingeleitet wird. Dadurch werden die Schwenk- und Drehachsen entlastet. Ferner bewirken die Kraftübertragungselemente, dass die genannten Kräfte nicht linienförmig z. B. auf die stirnseitige Kante der Gleitbuchsen im Gelenkkopf wirken und diese beschädigen oder zu einer Verkantung der Gelenkachse führen. Die Kraftübertragungselemente verhindern also eine hohe Kantenlast und eine damit verbundene Kantenpressung durch Verkippung der Drehachse z. B. in den Gleitbuchsen.

Die genannten Kräfte werden vielmehr über flächig ausgebildete Stirnseiten der z. B. als Abstandshülsen ausgebildeten Kraftübertragungselemente flächig, z. B. über eine kreisringförmig Fläche, in den Grundkörper des Kettengliedes und insbesondere in die Seitenwand der Gabellaschen bzw. -arme eingeleitet.

Das einzelne Kettenglied enthält, wie bereits erwähnt, jeweils ein Kettenglied-Grundkörper. Der Grundkörper kann neben den Endbereichen und dem Zwischenbereich auch noch Anbindungsschnittstellen zur kraft- und/oder formschlüssigen Anbindung eines Förderorgans enthalten. Die Anbindungsschnittstelle kann Anbindungsbauteile, wie Verbindungsplatten oder Aufnahmen, z. B. Durchlässe, umfassen, über welche ein Förderorgan an den Grundkörper des Kettengliedes befestigt wird.

Ein solches Förderorgan kann z. B. ein Mitnehmer, wie ein Greifer, eine Klammer, ein Plattenelement oder ein Magnetkörper sein. Dies soll jedoch keine abschliessende Aufzählung sein.

Die Anbindungsschnittstelle ist bevorzugt derart am Kettenglied ausgestaltet, dass diese zumindest teilweise oder vollständig ausserhalb eines Führungskanals einer Führungsschiene liegt.

Der Grundkörper mit den Endbereichen und dem Zwischenbereich kann einteilig ausgebildet sein. Einteilig bedeutet insbesondere, dass die einzelnen Elemente des Grundkörpers von diesem nicht lösbar sind. In diesem Fall ist auch die Anbindungsschnittstelle bevorzugt integraler Teil des Grundkörpers. Der Grundkörper enthält bevorzug ein Kunststoffwerkstoff oder besteht aus diesem. Der Grundkörper wird bevorzugt mittels eines Spritzgiessverfahrens in einem oder mehreren Spritzgiessschritten hergestellt.

Bestimmte Elemente des Grundkörpers, insbesondere solche die nicht aus Kunststoff sind, können als Einlegeteile in das Spritzgiesswerkzeug eingelegt und während der Herstellung des Grundkörpers zumindest teilweise mit Kunststoff umspritzt und auf diese Weise form- und/oder stoffschlüssig in den Grundkörper integriert werden.

Die Einlegeteile können z. B. die starren Zwischenelemente, die federelastischen Elemente, wie Federstahlelemente, Zugelemente, aber auch Gleitbuchsen in den Durchlässen sein. Die Gleitbuchsen können z. B. aus Metall, aus einem Kunststoffwerkstoff oder einer Kombination von Metall und einem Kunststoffwerkstoff bestehen. Die Gleitbuchsen können ferner mit PTFE (Polytetrafluorethylen) beschichtet sein oder daraus bestehen.

Ferner ist es auch möglich, dass in einem Spritzgiessverfahren verschiedene Kunststoffwerkstoffe gespritzt werden und ein einteiliger Grundkörper aus unterschiedlichen Kunststoffwerkstoffen geschaffen wird. So kann z. B. mittels Spritzgiessverfahren ein Kunststoffwerkstoff mit elastischen Eigenschaften, insbesondere gummielastischen Eigenschaften, im Zwischenbereich des Grundkörpers in das Formwerkzeug gespritzt werden, während ein zweiter, nichtelastischer bzw. nicht gummielastischer Kunststoff in einem oder beiden Endbereichen oder einem anderen Bereich des Grundkörpers gespritzt wird. Hierzu eignen sich insbesondere Thermoplastische Elastomere. In derartigen Spritzgiessverfahren werden Mehrkomponenten-, insbesondere Zweikomponenten-Spritzwerkzeuge verwendet.

Ein komplettes Förder-Kettenglied enthält neben dem Grundkörper noch Laufrollen und ggf. Führungsrollen, welche über entsprechende Verbindungselemente, wie Gelenkachsen, an den Grundkörper angebracht sind.

So kann das Kettenglied wenigstens eine Führungsrolle enthalten, deren Drehachse z.B. senkrecht zur Drehachse der Laufrollen und insbesondere auch senkrecht zur Längsrichtung des Kettengliedes angeordnet ist. Die Führungsrolle kann z. B. am Verbindungsorgan einer Anbindungsschnittstelle angebracht sein, z.B. zwischen den beiden Laufrollen.

Die Erfindung betrifft ferner auch eine Förderkette, enthaltend eine Mehrzahl von hintereinander angeordneten und über Gelenkverbindungen in Längsrichtung L der Kettenglieder miteinander gelenkig verbundenen Kettenglieder, wobei die Kettenglieder jeweils einen ersten Endbereich mit einem ersten Kupplungsabschnitt und einen zweiten Endbereich mit einem zweiten Kupplungsabschnitt aufweisen, und die Kettenglieder über die Kupplungsabschnitte miteinander gelenkig verbunden sind. Die Förderkette enthält wenigstens ein oben beschriebenes erfindungsgemässes Kettenglied. Bevorzugt besteht die gesamte Förderkette aus erfindungsgemässen Kettengliedern.

Die Kettenglieder sind über die Kupplungsabschnitte zweckmässig um eine senkrecht zur Längsachse L angeordnete Schwenkachse A schwenkbar miteinander verbunden. Der erste Endbereich ist relativ zum zweiten Endbereich über den elastisch verformbaren Zwischenbereich um eine senkrecht zur Schwenkachse A und senkrecht zur Längsrichtung L angeordnete Biegeachse B biegbar. Die Biegeachse entspricht z. B. der Kurvenachse eines kurvenförmigen Abschnittes der Umlaufbahn bzw. Förderstrecke, entlang welcher die Förderkette geführt wird.

In einer bevorzugten Weiterbildung ist die Förderkette ist bezüglich Formgebung bzw. Gestalt und vorzugsweise bezüglich Formgebung und Werkstoffe aus baugleichen Kettengliedern aufgebaut.

In diesem Fall geht jeweils der erste Kupplungskörper eines ersten Kettengliedes mit dem zweiten Kupplungskörper eines benachbarten, zweiten Kettengliedes eine gelenkige Verbindung ein. Der Begriff "baugleich bezüglich Formgebung" bezieht sich insbesondere auf konstruktiv identisch ausgebildete Endbereiche, Zwischenbereiche und ggf. Anbindungsschnittstellen.

Das einzelne Kettenglied bzw. die Gelenkverbindung zwischen den einzelnen Kettengliedern ist bevorzugt so ausgestaltet, dass die Förderkette über Druck- und oder Zugkräfte angetrieben werden kann. Die Gelenkverbindungen sind entsprechend so ausgebildet, dass diese Zugkräfte und/oder Druckkräfte zwischen den Kettengliedern übertragen können. Die Förderkette soll also sowohl gezogen als auch gestossen werden können.

Die erfindungsgemässe Förderkette lässt, wie auch die Förderketten gemäss Stand der Technik, eine Schwenkbewegung der Kettenglieder um die Schwenkachse A zu, wobei sich die Schwenkbewegung entlang der Mittelebene M des Kettengliedes beschränkt. Die Schwenkbarkeit der Förderkette um eine Kurvenachse der Förderkette, die senkrecht zu den Schwenkachsen A und den Längsachsen L der Kettenglieder liegt, wird durch die elastisch verformbaren Zwischenbereiche der Kettenglieder erreicht. Die Auslenkung des ersten Endbereichs relativ zum zweiten Endbereich eines einzelnen Kettengliedes ist zwar beschränkt. Die Förderkette erreicht jedoch durch die Summe der Durchbiegungen innerhalb der einzelnen Kettenglieder eine erhebliche Gesamtdurchbiegung um die genannte Kurvenachse der Förderkette. Die Auslenkung innerhalb der Kettenglieder kann 5 bis 10° (Winkelgrade), insbesondere 6 bis 8° betragen.

Im Weiteren kann der Zwischenbereich bzw. der dazugehörige, elastisch verformbare Körperabschnitt zusätzlich noch derart ausgebildet sein, dass dieser sich ein gewisses Mass um die Längsachse L des Kettengliedes auch tordieren lässt. So kann z. B. eine Torsion von bis zu 10° (Winkelgrad) vorgesehen sein. Dadurch werden die beiden Endbereiche des Kettengliedes relativ zueinander verdreht. Dies erlaubt somit auch eine Verwindung der Förderkette.

Die oben genannte Schwenkbarkeit der Kettenglieder erlaubt, die Förderkette in allen drei Raumdimensionen zu führen. Die Führungsbahn kann insbesondere spiralförmig ausgelegt sein, mit gleichzeitig Links- oder Rechtskurven und positiven oder negativen Steigungen.

Da zumindest bei der Durchbiegung des Zwischenbereichs zwecks Verschwenken des ersten Kupplungsabschnittes gegenüber dem zweiten Kupplungsabschnitt keine Bauteile gegeneinander gleiten bzw. reiben, kann der Verschleiss an den Kettengliedern tief gehalten werden.

Die erfindungsgemässen Kettenglieder erlauben überdies eine Leichtbauweise der Förderkette, indem diese zumindest teilweise aus einem Kunststoffwerkstoff gefertigt ist. Die Kettenglieder können hierzu in einer Art Hohlbauweise mit offenen und/oder geschlossenen Kammern ausgebildet sein. Da die Förderkette ein vergleichsweise geringes Gewicht aufweist und zudem einen reibungsarmen Betrieb gewährleistet, ist auch weniger Antriebsleistung erforderlich. Die Antriebe können daher entsprechend dimensioniert werden.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1a: eine Seitenansicht einer ersten Ausführungsform eines erfindungsgemässen Kettenglied-Grundkörpers;
- Figur 1b: eine perspektivische Ansicht eines Kettenglied-Grundkörpers nach Figur 1a;
- Figur 2a: eine Ansicht von unten einer ersten Ausführungsform eines erfindungsgemässen Kettengliedes;
- Figur 2b: eine perspektivische Ansicht eines Kettengliedes nach Figur 2a;
- Figur 2c: eine Ansicht von unten einer modifizierten, ersten Ausführungsform eines erfindungsgemässen Kettengliedes;
- Figur 3a: eine perspektivische Ansicht einer Förderkette aus Kettengliedern gemäss Figur 2a und 2b und einer Längsführungseinrichtung;
- Figur 3b: eine Querschnittsansicht durch eine Anordnung nach Figur 3a;
- Figur 4: eine Seitenansicht einer zweiten Ausführungsform eines erfindungsgemässen Kettengliedes;
- Figur 5a: eine Seitenansicht einer dritten Ausführungsform eines erfindungsgemässen Kettengliedes;
- Figur 5b: eine Ansicht von unten der dritten Ausführungsform eines erfindungsgemässen Kettengliedes gemäss Figur 5a;
- Figur 5c: eine Ansicht von unten einer modifizierten, dritten Ausführungsform eines erfindungsgemässen Kettengliedes;
- Figur 6: eine perspektivische Ansicht eines erfindungsgemässen Kettengliedes mit Förderorgan;
- Figur 7: eine perspektivische Ansicht einer weiteren Ausführungsform eines erfindungsgemässen Kettengliedes mit Förderorgan;
- Figur 8: eine perspektivische Ansicht des Kettengliedes nach Figur 7;
- Figur 9: eine Ansicht von unten des Kettengliedes nach Figur 7;
- Figur 10: eine perspektivische Ansicht einer weiteren Ausführungsform eines erfindungsgemässen Kettengliedes;
- Figur 11: eine Ansicht von unten des Kettengliedes nach Figur 10;
- Figur 12: eine Seitenansicht des Kettengliedes nach Figur 10;
- Figur 13: eine Querschnittsansicht entlang der Linie A-A des in einer Führungsschiene geführten Kettengliedes nach Figur 10.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

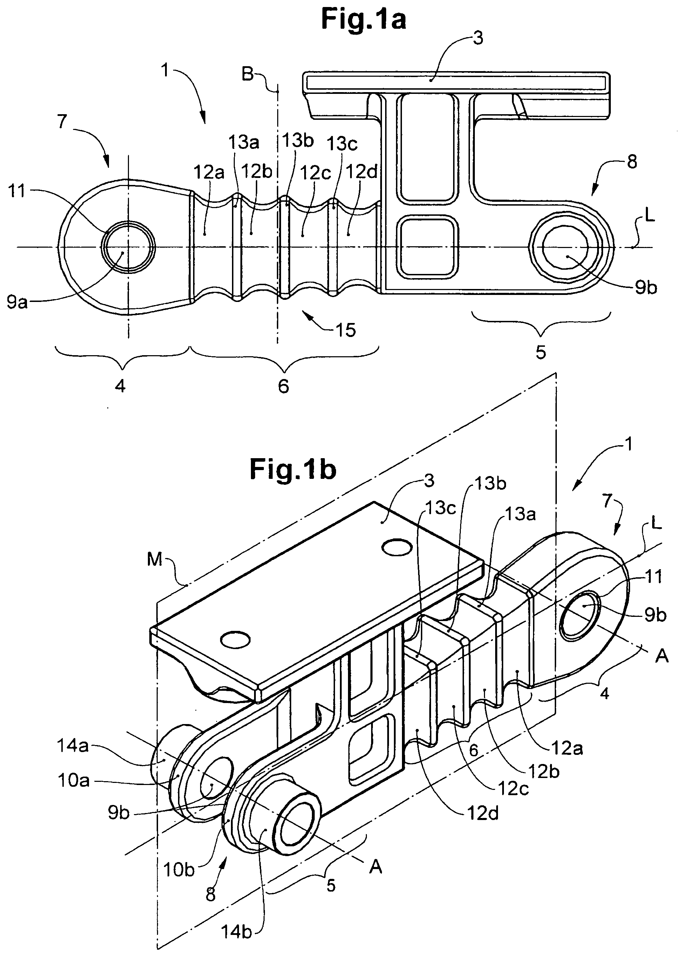

Der in den Figuren 1a-1b, 2a-2c und 3a-3b gezeigte Kettenglied-Grundkörper 1 umfasst einen ersten Endbereich 4, welcher einen ersten Kupplungsabschnitt 7 ausbildet, einen zweiten Endbereich 5, welcher einen zweiten Kupplungsabschnitt 8 ausbildet, sowie einen Zwischenbereich 6, welcher einen biegeelastischen Körperabschnitt 15 ausbildet. Ferner umfasst der Grundkörper 1 eine Anbindungsschnittstelle 3 in Form einer Anschlussplatte zum Befestigen eines Förderorgans (nicht gezeigt). Der biegeelastische Körperabschnitt 15 verbindet den ersten Kupplungsabschnitt 7 mit dem restlichen Grundkörper, welche den zweiten Kupplungsabschnitt 8 sowie die Anbindungsschnittstelle 3 für das Förderorgan enthält.

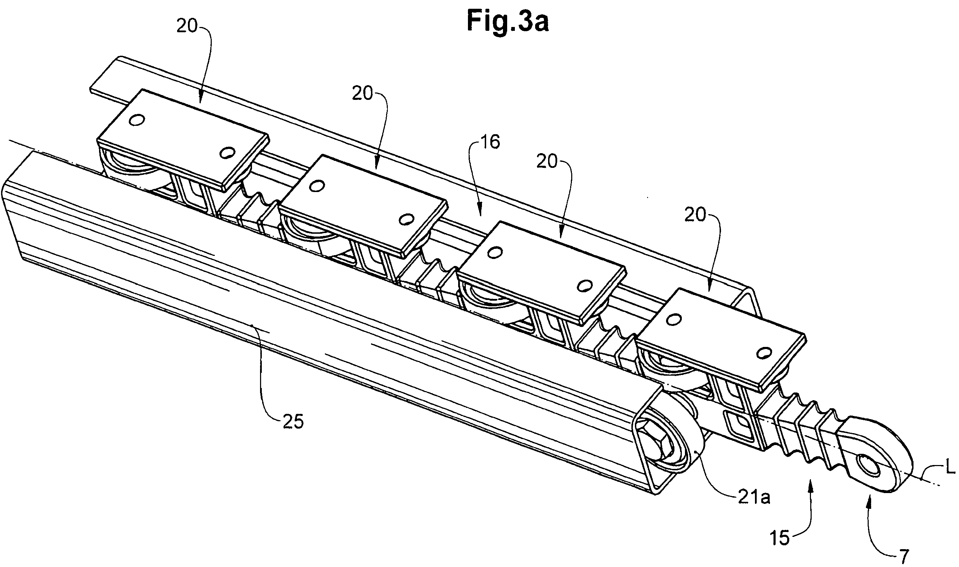

Der biegeelastische Körperabschnitt 15 ist so ausgestaltet, dass sich der erste Kupplungsabschnitt 7 um eine Biegeachse B relativ zum zweiten Kupplungsabschnitt 8 biegen lässt (Figur 3a). Die Biegeachse B liegt parallel zu einer Mittelebene M, welche durch die Längsachse L und einer senkrecht zur Schwenkachse A und senkrecht zur Längsachse L angeordneten Geraden aufgespannt wird. Der Grundkörper 1 mit den beiden Endbereichen 4, 5, dem Zwischenbereich 6 sowie der Anbindungsschnittstelle 3 ist bevorzugt einteilig ausgebildet. Die beiden Endbereiche 4, 5 sind ferner über den elastisch verformbaren Körperabschnitt 15 auch um die Längsachse L relativ zueinander tordierbar.

Der erste Kupplungsabschnitt 7, weist einen beidseitig abgeflachten Kupplungskopf mit einem Durchlass 9a auf, durch welchen, wie nachfolgend beschrieben, zwecks Herstellung einer Gelenkverbindung zwischen den Kettengliedern eine Gelenkachse 23 geschoben wird. In den Durchlass 9a ist eine Gleitbuchse 11 integriert, welche die besagte Gelenkachse 23 aufnimmt.

Der zweite Kupplungsabschnitt 8 ist gabelförmig ausgebildet und weist zwei voneinander beabstandete Gabellaschen bzw. Gabelarme 10a, 10b auf. Die Gabellaschen 10a, 10b bilden eine Aufnahme für den ersten Kupplungsabschnitt 7 eines gleichartig ausgebildeten Grundkörpers 1 eines benachbarten Kettengliedes 20 aus. Die Gabellaschen 10a, 10b verlaufen parallel zur Mittelebene M.

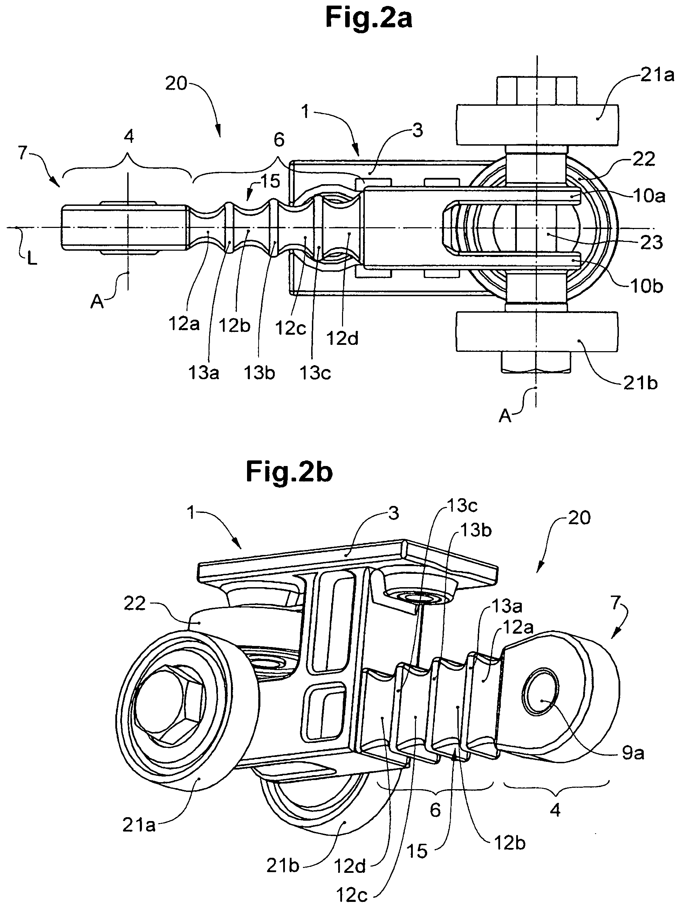

Durch die Gabellaschen 10a, 10b führen fluchtend zueinander verlaufende Durchlässe 9b, durch welche eine Gelenkachse 23 (siehe Figur 2a) führbar ist. Die Gelenkachse 23 bildet eine Schwenkachse A für die miteinander verbundenen Kettenglieder 20 sowie gegebenenfalls eine Drehachse für aussenseitig angebrachte Laufrollen aus (nicht gezeigt). Aussenseitig an den Gabellaschen 10a, 10b sind Achshülsen 14a, 14b, auch Distanzhülsen genannt, angebracht, welche fluchtend mit den Durchlässen 9b der Gabellaschen 10a, 10b angeordnet sind, und durch welche ebenfalls die Gelenkachse 23 führbar ist (nicht gezeigt).

Der biegeelastische Körperabschnitt 15 ist in der Längsachse L des Grundkörpers 1, d.h. in dessen Längsrichtung, mehrschichtig und gerippt ausgebildet. Hierzu sind in abwechselnder Folge biegeelastische Körpersegmente 12a-12d und starre Zwischenelemente 13a-13c in Längsrichtung L hintereinander angeordnet. Die biegeelastischen Körpersegmente 12a-12d sind aus einem Elastomer, wie z. B. Gummi. Die starren Zwischenelemente 13a-13c sind plattenförmige Elemente aus Metall oder Kunststoff. Die plattenförmigen Zwischenelemente 13a-13c bilden am biegeelastischen Körperabschnitt 15 eine rippenartige Struktur aus, indem die biegeelastischen Körpersegmente 12a-12d gegenüber den Zwischenelementen 13a-13c jeweils zumindest abschnittsweise einen quer zur Längsachse L betrachtet reduzierten Durchmesser aufweisen.

Zwecks Vermeidung von Spannungsspitzen zu den jeweiligen Zwischenelementen 13a-13c hin, weist das biegeelastische Körpersegment 12a-12d quer zur Längsachse L betrachtet jeweils eine teil- oder vollumfängliche konkave Vertiefung auf, wobei der Durchmesser des Körpersegmentes 12a-12d zum Zwischenelement 13a-13c hin jeweils zunimmt. Der gegenüber den Zwischenelementen 13a-13c jeweils reduzierte Durchmesser des biegeelastischen Körpersegments 12a-12d wirkt sich positiv auf die Biegeeigenschaften des Körperabschnittes aus. So werden mit dieser Massnahme einerseits der Biegeradius erhöht und andererseits die Biegekräfte reduziert. Der biegeelastische Körperabschnitt 15 verjüngt sich zum ersten Kupplungsabschnitt 7 hin (Figur 1a, 2a, 3a).

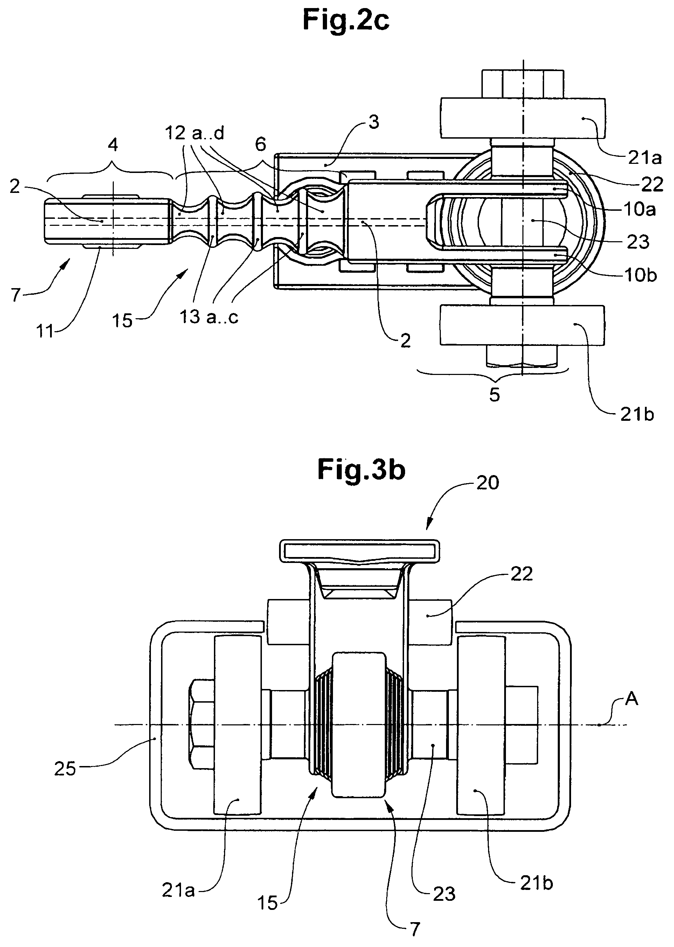

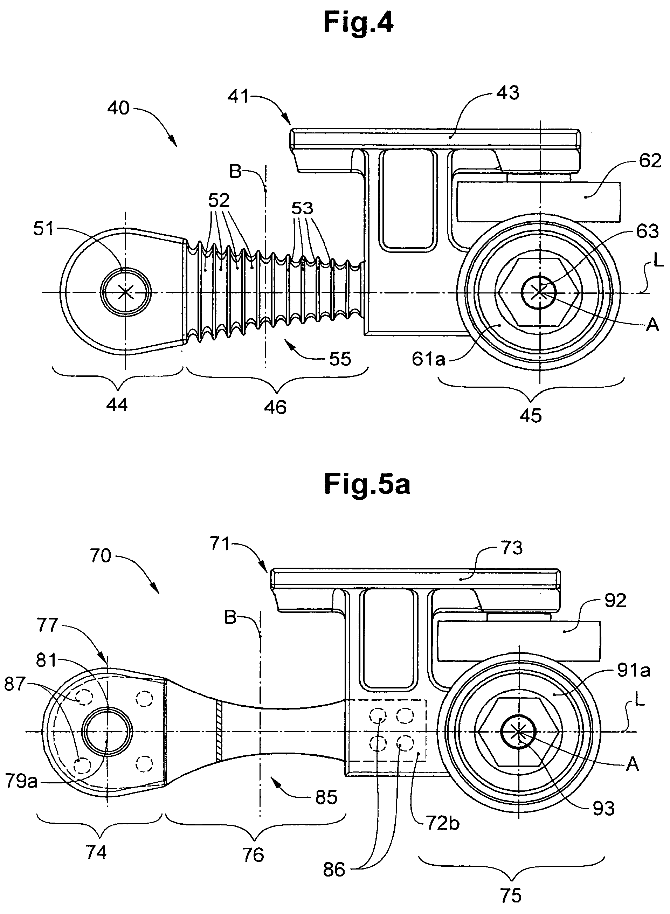

In Figur 2c ist ferners eine Modifikation der beschriebenen Ausführungsform nach Figur 1 und 2a bis 2b angedeutet. In den Grundkörper 1 kann ein sich vom ersten Endbereich 4 durch den Zwischenbereich 6 zum zweiten Endbereich 5 hin erstreckendes Zugelement 2 integriert sein. Das Zugelement 2 kann ein federelastisches Längselement aus einem Federstahlwerkstoff oder Kunststoffwerkstoff sein. Das Zugelement 2 kann analog zum Federstahlelement gemäss den Figuren 5a bis 5c flächenförmig ausgebildet und entsprechend hochkant angeordnet sein, so dass eine, mit dem Körperabschnitt aus Körpersegmenten 12a..d und Zwischenelementen 13a..c gemeinsame Biegeachse B parallel zur Mittelebene M ausgebildet wird.

Die Kombination des beschriebenen Körperabschnittes 15 mit einem Zugelement 2 hat den Vorteil, dass eine solche Förderkette sowohl auf Zug als auch auf Druck belastet werden kann. Während Zugkräfte in das Zugelement 2 eingeleitet werden, werden Druckkräfte durch den segmentierten Körperabschnitt 15 aufgenommen.

Das Zugelement kann z. B. als Einlegeteil in einem Spritzgiessverfahren in den Grundkörper 1 integriert werden.

Das erfindungsgemässe Kettenglied 20 (Figur 2a-2b und 3a-3b) umfasst neben dem oben beschriebenen Grundkörper 1 zwei Laufrollen 21 a, 21 b im Bereich der Gelenkverbindung. Eine Gelenkachse 23 durchstösst hierzu die beiden Durchlässe 9b in den Gabellaschen 10a, 10b und ist mit seitlich und aussen an den Gabellaschen 10a, 10b angeordneten Laufrollen 21 a, 21 b verbunden (Figur 2a). Zur Herstellung einer Gelenkverbindung zwischen zwei Kettengliedern 20 wird überdies der abgeflachte Kupplungskopf des ersten Kupplungsabschnittes 7 zwischen die Gabellaschen 10a, 10b eingeschoben, wobei die Gelenkachse 23 durch die beiden Durchlässe 9b der Gabellaschen 10a, 10b und die durch den Durchlass 9a des Kupplungskopfes geführt ist. Die Durchlässe 9a, 9b, die Gelenkachse 23 sowie die Drehachsen der Laufrollen 21a, 21b liegen alle in einer gemeinsamen Schwenkachse A.

Das Kettenglied 20 enthält überdies eine drehbar am Kettenglied-Grundkörper 1 angebrachte Führungsrolle 22, deren Drehachse senkrecht zur Schwenkachse A und senkrecht zur Längsachse L des Kettengliedes 20 ist. Die Führungsrolle 22 dient der seitlichen Führung der Förderkette 16 in einer Führungsschiene 25. Die Förderkette 16 gemäss Figur 3a und 3b besteht aus einer Mehrzahl von gelenkig miteinander verbundenen Kettengliedern 20, wie oben beschrieben, welche in einer C-förmigen Führungsschiene 25 gerührt sind. Die Kettenglieder 20 rollen hierzu mit ihren Laufrollen 21a, 21b an der Führungsschiene ab, während die Förderkette 16 im Bereich der Schienenöffnung durch die Führungsrollen 22 seitlich geführt ist.

Die Figur 4 zeigte eine weitere Ausführungsvariante eines erfindungsgemässen Kettengliedes 40 mit einem Kettenglied-Grundkörper 41 sowie daran angebrachten Laufrollen 61a und einer Führungsrolle 62. Das Kettenglied 40 und dessen Grundkörper 41 sind grundsätzlich gleich aufgebaut wie das oben beschriebene Kettenglied 20 bzw. Grundkörper 1 nach Figur 1 und 2. Der Grundkörper 41 enthält auch hier einen ersten Endbereich 44, welcher einen ersten Kupplungsabschnitt 47 ausbildet, einen zweiten Endbereich 45, welcher einen zweiten Kupplungsabschnitt (auf Figur 4 nicht sichtbar) ausbildet, sowie einen Zwischenbereich 46, welcher einen biegeelastischen Körperabschnitt 55 ausbildet. Ferner umfasst der Grundkörper 41 eine Anbindungsschnittstelle 43 in Form einer Anschlussplatte zum Befestigen eines Förderorgans (nicht gezeigt). Der biegeelastische Körperabschnitt 55 verbindet den ersten Kupplungsabschnitt 47 mit dem restlichen Grundkörper, welche den zweiten Kupplungsabschnitt sowie die Anbindungsschnittstelle 43 für das Förderorgan enthält.

Der erste Kupplungsabschnitt 47, weist ebenfalls einen beidseitig abgeflachten Kupplungskopf mit einem Durchlass 49a auf, zur Herstellung einer Gelenkverbindung zwischen den Kettengliedern. In den Durchlass 49a ist eine Gleitbuchse 51 integriert, welche die Gelenkachse 63 eines benachbarten Kettengliedes 40 aufnimmt.

Der zweite Kupplungsabschnitt ist ebenfalls gabelförmig ausgebildet und weist zwei voneinander beabstandete Gabellaschen auf (auf Figur 4 nicht sichtbar). Die Gabellaschen bilden eine Aufnahme für den ersten Kupplungsabschnitt 47 eines gleichartig ausgebildeten Grundkörpers 41 eines benachbarten Kettengliedes 40 aus. Der Grundkörper 41 mit den genannten Elementen ist ebenfalls einteilig hergestellt. Der Grundkörper 41 ist insbesondere mittels eines Spritzgiessverfahrens hergestellt.

Die vorliegende Ausführungsvariante unterscheidet sich von der in Figur 1 und 2 gezeigten Ausführungsvariante durch einen anders ausgestalteten, biegeelastischen Körperabschnitt 55. Dieser ist jedoch ebenfalls so ausgelegt ist, dass sich der erste Kupplungsabschnitt 47 um eine Biegeachse B relativ zum zweiten Kupplungsabschnitt 48 biegen lässt. Der biegeelastische Körperabschnitt 55 ist in der Längsachse L des Grundkörpers 41 ebenfalls mehrschichtig und gerippt ausgebildet. Hierzu sind in abwechselnder Folge eine Vielzahl von biegeelastischen Körpersegmenten 52 und starren Zwischenelementen 53 in Längsrichtung L hintereinander angeordnet.

Der Übersicht halber werden die Körpersegmente 52 und die Zwischenelemente 53 jeweils mit dem gleichen Bezugszeichen bezeichnet. Im Gegensatz zur Figur 1 und 2 sind in diesem Ausführungsbeispiel wesentlich mehr Körpersegmente 52 und Zwischenelemente 53 vorgesehen, welche dementsprechend eine geringere Ausdehnung in Längsrichtung L aufweisen.

Die biegeelastischen Körpersegmente 52 sind ebenfalls aus einem Elastomer, wie z. B. Gummi. Die starren Zwischenelemente 53 sind plattenförmige Elemente aus Metall oder Kunststoff. Die plattenförmige Zwischenelemente 53 bilden am biegeelastischen Körperabschnitt 55 ebenfalls eine rippenartige Struktur aus, indem die biegeelastischen Körpersegmente 52 gegenüber den Zwischenelementen 53 jeweils zumindest abschnittsweise einen quer zur Längsachse L betrachtet reduzierten Durchmesser aufweisen. Das biegeelastische Körpersegment 52 weist jeweils quer zur Längsachse L betrachtet eine teil- oder vollumfängliche konkave Vertiefung auf, wobei der Durchmesser des Körpersegmentes 52 zum Zwischenelement 53 hin jeweils zunimmt. Der biegeelastische Körperabschnitt 55 verjüngt sich ferner zum ersten Kupplungsabschnitt 47 hin.

Der biegeelastische Körperabschnitt 15, 55 gemäss den beiden Ausführungsformen nach Figur 1 bis 4 ist in einer Querschnittsansicht quer zur Längsachse L jeweils rechteckförmig ausgestaltet. Grundsätzlich kann der Körperabschnitt 15, 55 jedoch eine beliebige Querschnittsform annehmen. Die Querschnittsform kann z. B. auch allgemein polygonal, kreisförmig oder oval sein.

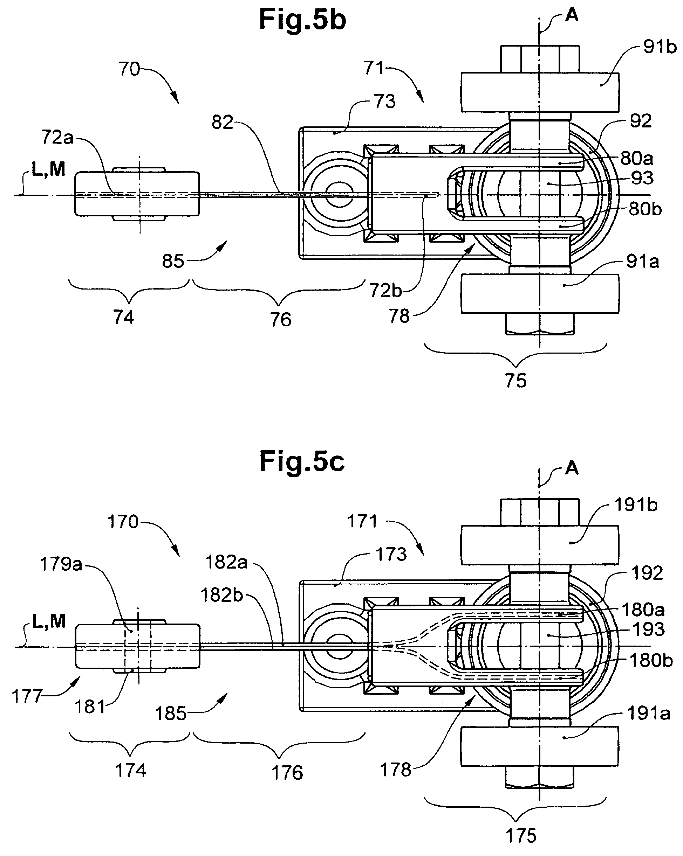

Die Figur 5a und 5b zeigt eine weitere Ausführungsform eines erfindungsgemässen Kettengliedes 70 mit einem Kettenglied-Grundkörper 71 sowie daran angebrachten Laufrollen 91a, 91b und einer Führungsrolle 92. Das Kettenglied 70 und dessen Grundkörper 71 sind grundsätzlich analog zu den beiden oben beschriebenen Ausführungsformen von Kettengliedern 20, 40 nach Figur 1 bis 4 aufgebaut. Der Grundkörper 71 enthält auch hier einen ersten Endbereich 74, welcher einen ersten Kupplungsabschnitt 77 ausbildet, einen zweiten Endbereich 75, welcher einen zweiten Kupplungsabschnitt 78 ausbildet, sowie einen Zwischenbereich 76, welcher einen biegeelastischen Körperabschnitt 85 ausbildet.

Ferner umfasst der Grundkörper 71 eine Anbindungsschnittstelle 73 in Form einer Anschlussplatte zum Befestigen eines Förderorgans (nicht gezeigt). Der biegeelastische Körperabschnitt 85 verbindet den ersten Kupplungsabschnitt 77 mit dem restlichen Grundkörper, welche den zweiten Kupplungsabschnitt 78 sowie die Anbindungsschnittstelle 73 für das Förderorgan enthält.

Der erste Kupplungsabschnitt 77, weist ebenfalls einen beidseitig abgeflachten Kupplungskopf mit einem Durchlass 79a auf, zur Herstellung einer Gelenkverbindung zwischen den Kettengliedern. In den Durchlass 79a ist eine Gleitbuchse 81 integriert, welche die Gelenkachse 93 eines benachbarten Kettengliedes 70 aufnimmt.

Der zweite Kupplungsabschnitt 78 ist ebenfalls gabelförmig ausgebildet und weist zwei voneinander beabstandete Gabellaschen 80a, 80b auf. Die Gabellaschen 80a, 80b bilden eine Aufnahme für den ersten Kupplungsabschnitt 77 eines gleichartig ausgebildeten Grundkörpers 71 eines benachbarten Kettengliedes 70 aus.

Die vorliegende Ausführungsvariante unterscheidet sich von den beiden anderen Ausführungsformen nach Figur 1 bis 4 durch einen anders ausgestalteten, biegeelastischen Körperabschnitt 85. Dieser ist jedoch ebenfalls so ausgelegt ist, dass sich der erste Kupplungsabschnitt 77 um eine Biegeachse B relativ zum zweiten Kupplungsabschnitt 78 biegen lässt.

Der biegeelastische Körperabschnitt 85 besteht aus einem in der Längsachse L des Grundkörpers 71 verlaufenden flächenförmigen Element 82 aus Federstahl. Das flächenförmige Federstahlelement 82 ist in einer Seitenansicht nach Figur 5a hochkant ausgerichtet und liegt parallel zur Mittelebene M, so dass der erste Endbereich 74 um eine senkrecht zur Längsachse L und zur Schwenkachse A liegende Biegeachse B relativ zum zweiten Endbereich 75 schwenkbar ist. Das Federstahlelement ist mit einem ersten Endabschnitt 72a in den ersten Kupplungsabschnitt 77 und mit einem zweiten Endabschnitt 72b in den zweiten Kupplungsabschnitt 78 bzw. in den diesen enthaltenden Grundkörper integriert. Der erste und zweite Endabschnitt 72a, 72b weisen jeweils Aussparungen bzw. Durchbrüche 86, 87 auf. Diese Durchbrüche 86, 87 werden im Spritzgiessverfahren mit Kunststoff gefüllt, so dass eine formschlüssige Verbindung zwischen den Endbereichen und dem Element 82 entsteht.

Das Federstahlelement 82 kann derart ausgebildet sein, dass dieses mit seinem ersten Endabschnitt komplett in den ersten Kupplungsabschnitt 77 integriert ist und den Durchlass 79a teilweise oder komplett umgibt (siehe Figur 5b). Hierzu weist das Federstahlelement eine entsprechende Ausnehmung bzw. Öffnung auf. Auf diese Weise lässt sich der erste Kupplungsabschnitt 77 insbesondere im Bereich des Durchlasses 79a zusätzlich verstärken.

Das Federstahlelement weist ferner im Zwischenbereich 76 entlang seiner beiden schmalen Kanten eine konkave Vertiefung aus, wodurch eine halsartige Schmälerung ausgebildet wird. Diese Schmälerung setzt wiederum die aufzubringende Biegekraft herab und verbessert die Biegbarkeit des biegeelastischen Körperabschnittes 85 bei kleinem Kraftaufwand.

In Figur 5c ist eine gegenüber der Figur 5a und 5b abgewandelte Ausführungsform eines Kettengliedes 170 gezeigt. Dieses enthält ebenfalls einen Kettenglied-Grundkörper 171 sowie daran angebrachte Laufrollen 191 a, 191b und eine Führungsrolle 192. Das Kettenglied 170 und dessen Grundkörper 171 sind grundsätzlich analog zur Ausführungsform gemäss Figur 5a-5b aufgebaut. Der Grundkörper 171 enthält auch hier einen ersten Endbereich 174, welcher einen ersten Kupplungsabschnitt 177 ausbildet, einen zweiten Endbereich 175, welcher einen zweiten Kupplungsabschnitt 178 ausbildet, sowie einen Zwischenbereich 176, welcher einen biegeelastischen Körperabschnitt 185 ausbildet. Ferner umfasst der Grundkörper 171 eine Anbindungsschnittstelle 173 in Form einer Anschlussplatte zum Befestigen eines Förderorgans (nicht gezeigt). Der biegeelastische Körperabschnitt 185 verbindet den ersten Kupplungsabschnitt 177 mit dem restlichen Grundkörper, welche den zweiten Kupplungsabschnitt 178 sowie die Anbindungsschnittstelle 173 für das Förderorgan enthält.

Der erste Kupplungsabschnitt 177 weist ebenfalls einen beidseitig abgeflachten Kupplungskopf mit einem Durchlass 179a auf, zur Herstellung einer Gelenkverbindung zwischen den Kettengliedern 170. In den Durchlass 179a ist eine Gleitbuchse 181 integriert, welche die Gelenkachse 193 eines benachbarten Kettengliedes 170 aufnimmt.

Der zweite Kupplungsabschnitt 178 ist ebenfalls gabelförmig ausgebildet und weist zwei voneinander beabstandete Gabellaschen 180a, 180b auf. Die Gabellaschen 180a, 80b bilden eine Aufnahme für den ersten Kupplungsabschnitt 177 eines gleichartig ausgebildeten Grundkörpers 171 eines benachbarten Kettengliedes 170 aus.

Die vorliegende Ausführungsvariante unterscheidet sich von der Ausführungsform nach Figur 5a-5b dadurch, dass vorliegend der biegeelastische Körperabschnitt 185 zwei flächenförmige Elemente 182a, 182b aus Federstahl enthält. Der Körperabschnitt 185 ist jedoch ebenfalls so ausgelegt ist, dass sich der erste Kupplungsabschnitt 177 analog zur Ausführungsform nach Figur 5a-5b um eine Biegeachse B relativ zum zweiten Kupplungsabschnitt 178 biegen lässt.

Die beiden Federstahlelemente 182a, 182b sind analog zur Ausführungsform nach Figur 5a-5b hochkant ausgerichtet und liegen parallel zur Mittelebene M, so dass der erste Endbereich 174 um eine senkrecht zur Längsachse L und senkrecht zur Schwenkachse A liegende Biegeachse B relativ zum zweiten Endbereich 175 schwenkbar ist. Die beiden Endbereiche 174, 175 sind ferner über den elastisch verformbaren Körperabschnitt 185 auch um die Längsachse L relativ zueinander tordierbar. Die Federstahlelemente 182a, 182b sind jeweils mit einem ersten Endabschnitt in den ersten Kupplungsabschnitt 177 und mit einem zweiten Endabschnitt in den zweiten Kupplungsabschnitt 178 integriert. Die beiden Federstahlelemente 182a, 182b verlaufen im Zwischenbereich 176 parallel nebeneinander. Zum zweiten Endbereich 178 hin laufen die beiden Elemente 182a, 182b jedoch im Grundkörper 171 V-förmig auseinander, wobei je ein Federstahlelement in eine der Gabellaschen 180a, 180b führt.

Die Federstahlelemente 182a, 182b sind derart ausgebildet, dass diese mit ihren ersten Endabschnitten komplett in den ersten Kupplungsabschnitt 177 integriert sind und den Durchlass 179a teilweise oder komplett umgeben. Hierzu weisen die Federstahlelement 182a, eine entsprechende Ausnehmung bzw. Öffnung auf (nicht gezeigt). Ferner sind die Federstahlelemente 182a, 182b derart ausgebildet, dass diese mit ihren zweiten Endabschnitten komplett in den zweiten Kupplungsabschnitt 178 integriert sind und die Durchlässe in den Gabellaschen 180a, 180b teilweise oder komplett umgeben. Hierzu weisen die Federstahlelement 182a, 182b ebenfalls jeweils eine entsprechende Ausnehmung bzw. Öffnung auf (nicht gezeigt).

Der Grundkörper 71 gemäss Figur 5a-5b bzw. der Grundkörper 171 gemäss Figur 5c mit den genannten Elementen ist ebenfalls einteilig hergestellt. Zur Herstellung des Grundkörpers 71, 171 kann das Federstahlelement 82 als Einlegeteil, bzw. können die Federstahlelemente 182a, 182b als Einlegeteile in ein Spritzgiesswerkzeug eingelegt werden, wobei in einem nachfolgenden Spritzgiessschritt der Kupplungsabschnitt 77, 177 und der restliche Grundkörper mit dem zweiten Kupplungsabschnitt 78, 178 und der Anbindungsschnittstelle 73, 173 aus Kunststoff gegossen und zusammen mit dem Federstahlelement bzw. den Federstahlelementen zu einem einteiligen Werkstück geformt werden.

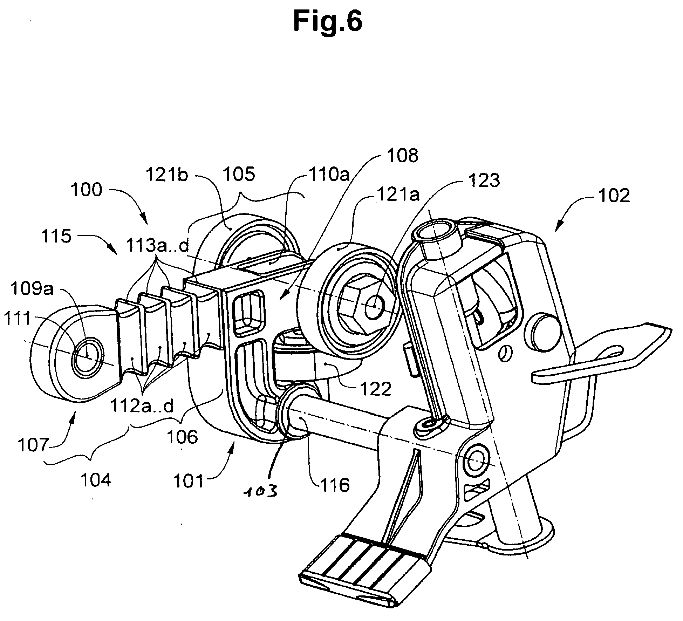

Die Figur 6 zeigt ein Kettenglied 100, welches bezüglich seinem ersten Endbereich 104, seinem zweiten Endbereich 105 und seinem Zwischenbereich 106 gleichartig ausgebildet ist, wie das Kettenglied 20 bezüglich Figur 2a bis 2c. Der erste Endbereich 104 bildet ebenfalls einen ersten Kupplungsabschnitt 107 in Form eines abgeflachten Kupplungskopfes mit einem Durchlass 109a und darin integriert eine Gleitbuchse 111 aus. Der zweite Endbereich 105 umfasst einen ebenfalls gabelförmig ausgebildeten zweiten Kupplungsabschnitt 108. Dieser weist zwei voneinander beabstandete Gabellaschen 110a, 110b auf.

Der Zwischenbereich 106 umfasst einen biegelastischen Körperabschnitt 115, bestehend aus abwechselnd angeordneten elastischen Körpersegmenten 112a..d und starren Zwischenelementen 113a..c, wie oben bereits beschrieben. Die beiden Endbereich 104, 105 sind analog zum Ausführungsbeispiel nach Figur 2a bis 2c relativ zueinander um eine Biegeachse B biegbar und um die Längsachse L tordierbar.

Im Weiteren ist eine durch die Durchlässe in den Gabellaschen 110a, 110b geführte Gelenkachse 123 vorgesehen, über welche zwei Laufrollen seitlich, aussen an den Gabellaschen 110a, 110b drehbar befestigt ist. Ferner weist das Kettenglied 100 eine Führungsrolle 122, wie ebenfalls oben beschrieben, auf.

Die vorliegende Ausführungsform unterscheidet sich von der Ausführungsform nach Figur 2a-2c dadurch, dass der Grundkörper 101 eine Anbindungsschnittstelle 103 zur Befestigung einer Förderklammer 102 aufweist. Hierzu umfasst die Anbindungsschnittstelle 103 eine Öffnung bzw. einen Durchlass, in welche eine Verbindungsachse 116 eingeführt bzw. durch welchen eine Verbindungsachse 116 geführt ist. An die Verbindungsachse 116, hier beispielsweise bolzenförmig ausgebildet, ist die Förderklammer 102 befestigt.

Die gezeigte Klammer 102 ist bezüglich ihrem funktionellen Aufbau im Stand der Technik bekannt. Eine solche Klammer mit derselben Funktionsweise ist zum Beispiel in der CH 592 562 A ausführlich beschrieben, weswegen an dieser Stelle auf eine eingehende Beschreibung derselbigen verzichtet wird.

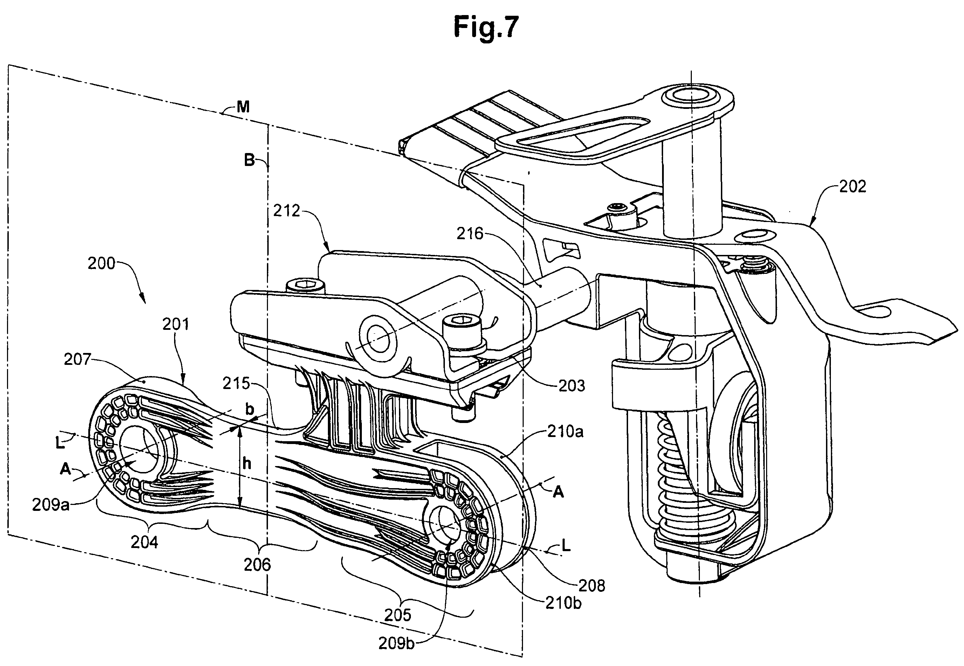

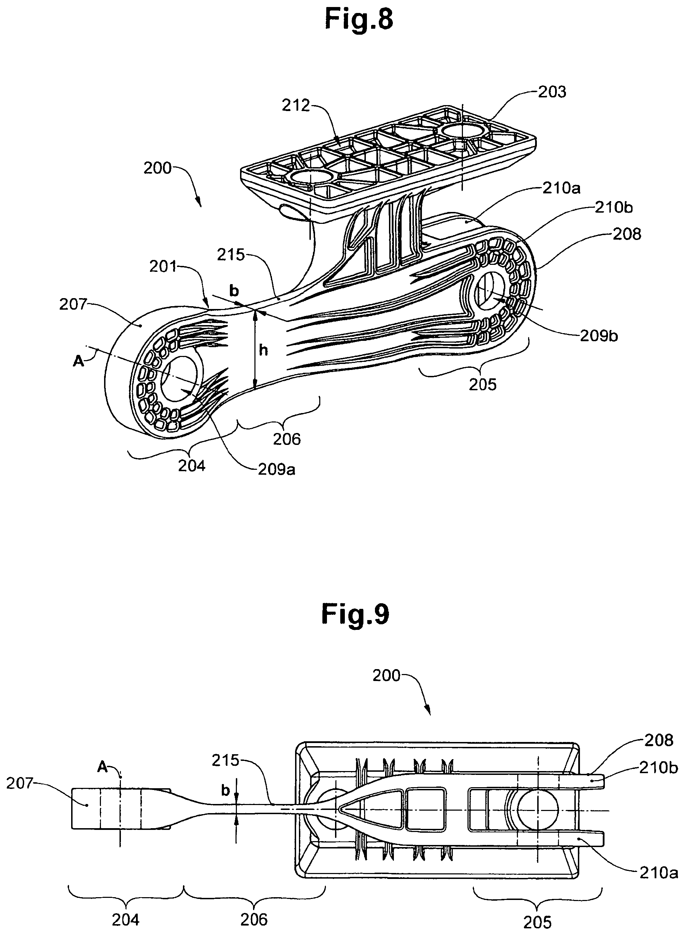

Das in den Figuren 7 bis 9 gezeigte Kettenglied 200 umfasst einen Kettenglied-Grundkörper 201 mit einem ersten Endbereich 204, welcher einen ersten Kupplungsabschnitt 207 ausbildet, mit einem zweiten Endbereich 205, welcher einen zweiten Kupplungsabschnitt 208 ausbildet, sowie mit einem Zwischenbereich 206, welcher einen biegeelastischen Körperabschnitt 215 ausbildet. Ferner umfasst der Grundkörper 201 eine Anbindungsschnittstelle 203 zum Befestigen eines Förderorgans 202.

Die Anbindungsschnittstelle 203 liegt in Form eines zwischen den beiden Kupplungsabschnitten 207, 208, insbesondere in der Nähe des zweiten Kupplungsabschnittes 208, angeformten Verbindungsorgans mit einer fachwerkartig ausgebildeten Verbindungsfläche 212 mit Durchbrüchen für Verbindungskörper, wie Schrauben oder Bolzen, vor.

Der biegeelastische Körperabschnitt 215 verbindet den ersten Kupplungsabschnitt 207 mit dem restlichen Grundkörper, welcher den zweiten Kupplungsabschnitt 208 sowie die Anbindungsschnittstelle 203 für das Förderorgan enthält. Der biegeelastische Körperabschnitt 215 ist so ausgestaltet, dass sich der erste Kupplungsabschnitt 207 analog zu den voran gehend beschriebenen Ausführungsbeispielen um eine Biegeachse B relativ zum zweiten Kupplungsabschnitt 208 elastisch biegen lässt.

Der Grundkörper 201 mit den beiden Endbereichen 204, 205, dem Zwischenbereich 206 sowie im vorliegenden Ausführungsbeispiel auch mit der Anbindungsschnittstelle 203 ist einteilig ausgebildet. Die beiden Endbereiche 204, 205 sind ferner über den elastisch verformbaren Körperabschnitt 215 auch um eine Längsachse L relativ zueinander tordierbar.

Der erste Kupplungsabschnitt 207, weist einen beidseitig abgeflachten Kupplungskopf mit einem Durchlass 209a auf, durch welchen, wie nachfolgend beschrieben, zwecks Herstellung einer Gelenkverbindung zwischen den Kettengliedern eine Gelenkachse geschoben werden kann (nicht gezeigt). In den Durchlass 209a kann hierzu eine Gleitbuchse (nicht gezeigt) integriert werden, welche die Gelenkachse aufnimmt. Der zweite Kupplungsabschnitt 208 ist gabelförmig ausgebildet und weist zwei voneinander beabstandete Gabellaschen bzw. Gabelarme 210a, 210b mit jeweils einem Durchlass 209b auf. Die Gabellaschen 210a, 210b bilden eine Aufnahme für den ersten Kupplungsabschnitt 207 eines gleichartig ausgebildeten Grundkörpers 201 eines benachbarten Kettengliedes 200 aus.

Zur Herstellung der Verbindung wird die Gelenkachse, welche überdies zwei Laufrollen aufnimmt, nach Einschieben des Kupplungskopfes 207 zwischen die beiden Gabellaschen 210a, 210b durch die miteinander fluchtenden Durchlässe 209a, 209b des Kupplungskopfes 207 und der Gabellaschen 210a, 210b geführt und arretiert (siehe hierzu auch Figur 2a bis 2c).

Der biegeelastische Körperabschnitt 215 ist ein vergleichsweise dünnwandiger, flächiger Körperabschnitt 215 aus faserverstärktem Kunststoff mit einem relativ kleinen Verhältnis von Wanddicke b zur Höhe h des Körperabschnittes 215. Die Wanddicke beträgt zwischen 1 und 2 mm und nimmt vom Körperabschnitt 215 zu den beiden Endbereichen 204, 205 hin jeweils kontinuierlich zu.

Das Kettenglied 200 weist ferner in den beiden Endbereichen 204, 205 längs laufende, insbesondere in Richtung der Längsachse L verlaufende, aussen liegende Verstärkungsrippen auf.

Über die Anbindungsschnittstelle 203 des Kettengliedes 200 ist eine aus dem Stand der Technik bekannte Förderklammer 202 am Kettenglied 200 befestigt. Die Förderklammer 202 ist hierzu über ein an einer Verbindungsachse 216 angebrachtes Verbindungsorgan 211 der Förderklammer 202 mit der Anbindungsschnittstelle 203 verschraubt. Das Verbindungsorgan 211 liegt hierzu der fachwerkartig ausgebildeten Verbindungsfläche 212 der Anbindungsschnittstelle 203 flächig auf.

Die gezeigte Klammer 202 ist bezüglich ihrem funktionellen Aufbau im Stand der Technik bekannt. Eine solche Klammer mit derselben Funktionsweise ist zum Beispiel in der CH 592 562 A ausführlich beschrieben, weswegen an dieser Stelle auf eine eingehende Beschreibung derselbigen verzichtet wird.

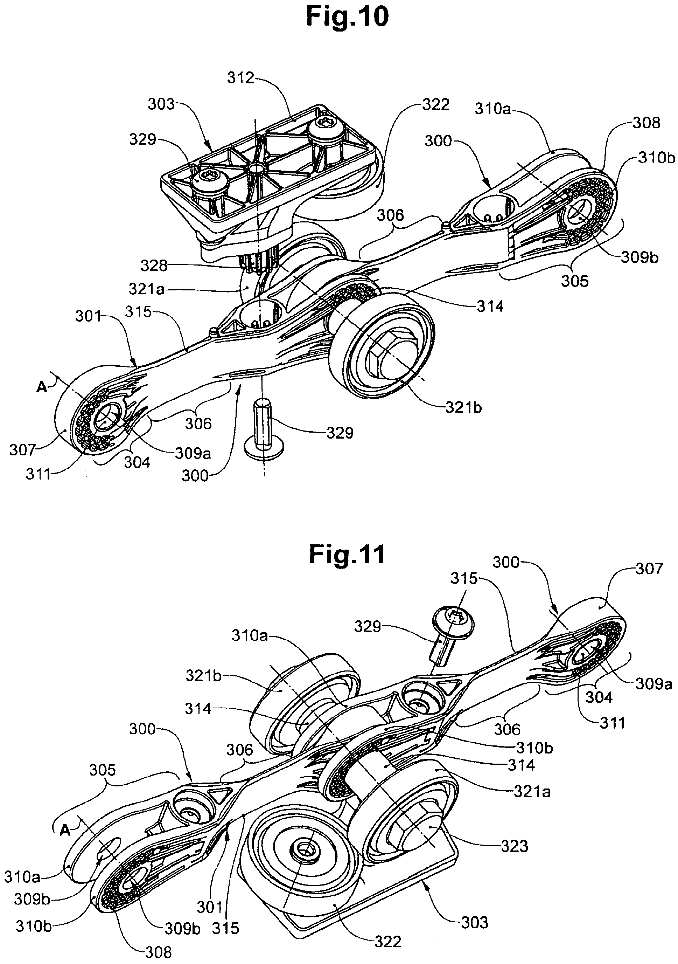

Das in den Figuren 10 bis 13 gezeigte Kettenglied 300 ist ähnlich aufgebaut wie das Kettenglied gemäss den Figuren 7 bis 9. Das Kettenglied 300 umfasst einen Kettenglied-Grundkörper 301 mit einem ersten Endbereich 304, welcher einen ersten Kupplungsabschnitt 307 ausbildet, mit einem zweiten Endbereich 305, welcher einen zweiten Kupplungsabschnitt 308 ausbildet, sowie mit einem Zwischenbereich 306, welcher einen biegeelastischen Körperabschnitt 315 ausbildet. Ferner umfasst das Kettenglied 300 eine Anbindungsschnittstelle 303 zum Befestigen eines Förderorgans (nicht gezeigt).

Die Anbindungsschnittstelle 303 liegt in Form eines zwischen den beiden Endbereichen 304, 305, insbesondere in der Nähe des zweiten Kupplungsabschnittes 208, angeformten Verbindungsorgans mit einer fachwerkartig ausgebildeten Verbindungsfläche 312 mit Durchbrüchen für Verbindungskörper, wie Schrauben oder Bolzen, vor.

Das Verbindungsorgan 303 ist über eine, zwischen den beiden Kupplungsabschnitten 207, 208, in der Nähe des zweiten Kupplungsabschnittes 208 angeordnete Kraft- und/oder Formschlussverbindung mit dem Grundkörper 301 verbunden. Hierzu weist das Verbindungsorgan 303 einen Hohlzapfen 328 auf, welcher in einen korrespondierende Durchbruch im Grundkörper 301 des Kettengliedes 300 in eine Richtung quer zur Drehachse der Laufrollen 321a, 321b und quer zur Längsrichtung L des Kettengliedes eingeschoben wird. Auf diese Weise wird das Verbindungsorgan 303 auf dem Grundkörper 301 positioniert und ausgerichtet. Von der Gegenseite wird nun ein Verbindungskörper, z. B. ein Verbindungsbolzen 329, durch den Durchbruch und den Hohlzapfen eingeschoben und fixiert.

Am Verbindungsorgan 303 des Kettengliedes 300 ist auch eine Führungsrolle 303 angeordnet, dessen Drehachse senkrecht zur Drehachse der Laufrollen 321 a, 321b sowie senkrecht zur Längsrichtung des Kettengliedes 300 liegt.

Der biegeelastische Körperabschnitt 315 verbindet den ersten Kupplungsabschnitt 307 mit dem restlichen Grundkörper, welcher den zweiten Kupplungsabschnitt 308 enthält. Der biegeelastische Körperabschnitt 315 ist so ausgestaltet, dass sich der erste Kupplungsabschnitt 307 analog zu den voran gehend beschriebenen Ausführungsbeispielen um eine Biegeachse B relativ zum zweiten Kupplungsabschnitt 308 elastisch biegen lässt.

Der Grundkörper 301 mit den beiden Endbereichen 304, 305 sowie dem Zwischenbereich 306 ist einteilig ausgebildet. Die beiden Endbereiche 304, 305 sind ferner über den elastisch verformbaren Körperabschnitt 315 auch um eine Längsachse L relativ zueinander tordierbar.

In den Figuren 10 bis 12 sind beispielhaft zwei miteinander verbundene, gleichartig aufgebaute Kettenglieder 300 gezeigt. Der erste Kupplungsabschnitt 307, weist einen beidseitig abgeflachten Kupplungskopf mit einem Durchlass 309a auf. In den Durchlass 309a ist eine Gleitbuchse 311 integriert, welche eine Gelenkachse 323 aufnimmt. Der zweite Kupplungsabschnitt 308 ist gabelförmig ausgebildet und weist zwei voneinander beabstandete Gabellaschen bzw. Gabelarme 310a, 310b mit jeweils einem Durchlass 309b auf. Die Gabellaschen 310a, 310b bilden eine Aufnahme für den Kupplungskopf 307 des gleichartig ausgebildeten Grundkörpers 301 eines benachbarten Kettengliedes 300 aus.

Zur Herstellung der Verbindung wird der Kupplungskopf 307 eines ersten Kettengliedes 300 zwischen die beiden Gabellaschen 310a, 310b des benachbarten zweiten Kettenglied 300 geschoben. Anschliessend wird die Gelenkachse 323 durch die miteinander fluchtenden Durchlässe 309a, 309b des Kupplungskopfes 307 und der Gabellaschen 310a, 310b geführt und arretiert.

Seitlich aussen von den Gabellaschen 310a, 310b ist je eine Laufrolle 321 a, 321b über die seitlichen Endabschnitte der Gelenkachse 323 geschoben und auf dieser fixiert. Die Laufrollen 321a, 321b sind jeweils von den benachbarten Gabellaschen 310a, 310b etwas beabstandet. Zwischen der Laufrolle 321a, 321b und der Gabellasche 310a, 310b ist jeweils eine Abstandshülse 413 angeordnet, durch welche die Gelenkachse 323 geführt ist.

Der biegeelastische Körperabschnitt 315 ist auch gemäss dieser Ausführungsform ein vergleichsweise dünnwandiger, flächiger Körperabschnitt 315 aus faserverstärktem Kunststoff mit einem relativ kleinen Verhältnis von Wanddicke b zur Höhe h des Körperabschnittes 315. Die Wanddicke beträgt zwischen 1 und 2 mm und nimmt vom Körperabschnitt 315 zu den beiden Endbereichen 304, 305 hin jeweils stetig zu.

Das Kettenglied 300 weist ferner in den beiden Endbereichen 304, 305 längs laufende, insbesondere in Richtung der Längsachse L verlaufende, aussen liegende Verstärkungsrippen auf.

Über die Anbindungsschnittstelle 303 des Kettengliedes 300 kann z. B. analog zum Ausführungsbeispiel nach Figur 7 eine Förderklammer am Kettenglied 300 befestigt werden.

Die Kettenglieder 300 rollen in Betrieb über die Laufrollen 321a, 321b auf einem Führungsprofil ab. Die Führungsrolle 322 dient der Führung des Kettengliedes 300 entlang des Förderbahn, insbesondere in Kurven. Die Führungsrolle 322 rollt entlang einer Führungsstrecke ab. Im Gegensatz zu den Laufrollen 321 a, 321 b lasten jedoch auf der Führungsrolle 322 keine Traglasten.

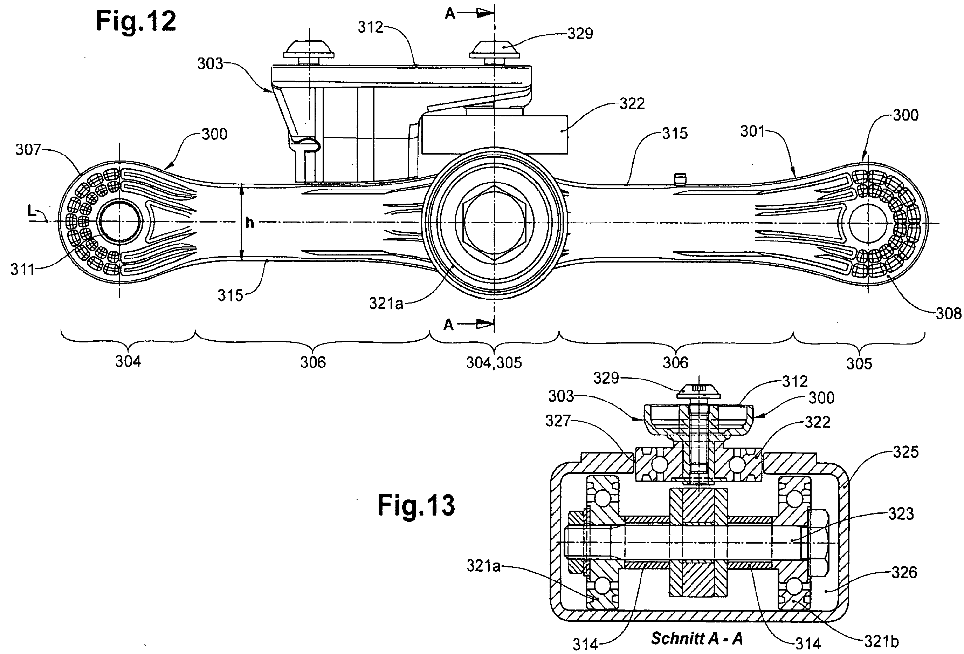

Gemäss Figur 13 ist das Führungsprofil 325 als C-Profil ausgebildet, welches einen hinterschnittenen Führungskanal 326 aufweist. Die Laufrollen 321a, 321b der Kettenglieder 300 sind in den hinterschnittenen Bereichen des Führungskanals 326 angeordnet, so dass diese nicht aus dem Führungskanal 326 springen können. Die Führungsrolle 322 ist im Bereich des Führungsspaltes des Führungsprofils 325, welcher in den Führungskanal 326 führt, angeordnet.

Die Anordnung ist so ausgestaltet, dass die Führungsrolle 322 entlang der seitlichen Längsbegrenzung des Führungsspaltes 327 abrollen kann. Der seitliche Bewegungsraum wird also durch die Führungsrolle 322 eingeschränkt. Dadurch wird zum Beispiel verhindert, dass die Laufrollen 321 a, 321 b im Führungskanal 326 seitlich anschlagen.

## Patentansprüche

1. Kettenglied einer Förderkette, enthaltend einen Grundkörper (1, 41, 71, 101, 171) mit einem ersten Endbereich (4, 44, 74, 104, 174), welcher einen ersten Kupplungsabschnitt (7, 47, 77, 107, 177) zur gelenkigen Verbindung mit einem Kupplungsabschnitt (8, 48, 78, 108, 178) eines ersten, benachbarten Kettengliedes umfasst, und mit einem zweiten Endbereich (5, 45, 75, 105, 175), welcher einen zweiten Kupplungsabschnitt (8, 48, 78, 108, 178) zur gelenkigen Verbindung mit einem Kupplungsabschnitt (7, 47, 77, 107, 177) eines zweiten, benachbarten Kettengliedes umfasst, wobei
der Grundkörper (1, 41, 71, 101, 171) einen zwischen den beiden Endbereichen (4, 44, 74, 104, 174; 5, 45, 75, 105, 175) liegenden Zwischenbereich (6, 46, 76, 106, 176) aufweist, welcher einen elastisch verformbaren Körperabschnitt (15, 55, 85, 115, 185) umfasst, **dadurch gekennzeichnet, dass** der elastisch verformbaren Körperabschnitt (15,55,85,115,185):
- elastisch biegbar ausgebildet ist, so dass der erste Endbereich (4, 44, 74, 104, 174) relativ zum zweiten Endbereich (5, 45, 75, 105, 175) aus der Längsrichtung (L) des Grundkörpers (1, 41, 71, 101, 171) biegbar ist und/oder
- elastisch tordierbar ausgebildet ist, so dass der erste Endbereich (4, 44, 74, 104, 174) relativ zum zweiten Endbereich (5, 45, 75, 105, 175) um die Längsrichtung (L) des Grundkörpers (1, 41, 71, 101, 171) tordierbar ist.

2. Kettenglied nach Anspruch 1, **dadurch gekennzeichnet, dass** der elastisch verformbare Körperabschnitt (15, 55, 85, 115, 185) aus einem Kunststoff, wie Elastomer, Thermoplast oder Duroplast, insbesondere aus einem faserverstärktem Kunststoff, besteht oder diesen enthält.

3. Kettenglied nach einem der Ansprüche 1 bis 2, **dadurch gekennzeichnet, dass** der elastisch verformbare Körperabschnitt (15, 55, 85, 115, 185) aus einem Federstahlwerkstoff besteht oder diesen enthält.

4. Kettenglied nach einem der Ansprüche 1 bis 3, **dadurch gekennzeichnet, dass** der elastisch verformbare Körperabschnitt (15, 55, 85, 115, 185) ein Zugelement (2, 82, 182a, 182b), insbesondere ein Federstahlelement, zur Aufnahme von Zugspannungen enthält oder aus diesem besteht.

5. Kettenglied nach Anspruch 4, **dadurch gekennzeichnet, dass** der elastisch verformbare Körperabschnitt (15, 55, 85, 115, 185) einen Kunststoffwerkstoff, insbesondere einen Elastomerwerkstoff, zur Aufnahme von Druckspannungen, und ein in den Kunststoffwerkstoff integriertes, vorzugsweise formschlüssig integriertes, Zugelement (2, 82, 182a, 182b) zur Aufnahme von Zugspannungen enthält.

6. Kettenglied nach einem der Ansprüche 1 bis 5, **dadurch gekennzeichnet, dass** der elastisch verformbare Körperabschnitt (15, 55, 115) ein in Längsrichtung des Kettengliedes mehrschichtiger Körperabschnitt, vorzugsweise aus abwechselnd elastisch verformbaren Segmenten (12a..d, 52), vorzugsweise aus einem Kunststoffwerkstoff, insbesondere einem Elastomer, und starren Zwischenelementen (13a..c, 53), vorzugsweise aus Metall oder Kunststoff, ist.

7. Kettenglied nach einem der Ansprüche 1 bis 6, **dadurch gekennzeichnet, dass** der zweite Endbereich (5, 45, 75, 105, 175) einen gabelförmigen, zweiten Kupplungsabschnitt (8, 48, 78, 108, 178) mit zwei Gabellaschen (10a..b, 80a..b, 110a..b, 180a..b) umfasst, welcher eine Aufnahme für den Kupplungsabschnitt (7, 47, 77, 107, 177) eines benachbarten Kettengliedes ausbildet.

8. Kettenglied nach einem der Ansprüche 1 bis 7, **dadurch gekennzeichnet, dass** der elastisch verformbare Körperabschnitt (85, 185) mindestens ein sich in Längsrichtung (L) des Kettengliedes erstreckendes Element (82, 182a..b) aus einem federelastischen Werkstoff, insbesondere Federstahl, enthält oder aus diesem besteht.

9. Kettenglied nach Anspruch 8, **dadurch gekennzeichnet, dass** das mindestens eine elastisch verformbare Element (82, 182a..b) zum ersten und zweiten Endbereich (74, 174; 75, 175) hin in den Grundkörper (71, 171) integriert, vorzugsweise formschlüssig integriert, ist.

10. Kettenglied nach einem der Ansprüche 7 bis 9, **dadurch gekennzeichnet, dass** der elastisch verformbare Körperabschnitt (185) mindestens zwei sich in Längsrichtung (L) des Kettengliedes (70) vom ersten Kupplungsabschnitt (177) in Richtung des zweiten Kupplungsabschnittes (178) erstreckende und im Zwischenbereich (176) nebeneinander verlaufende federelastische Elemente (182a..b) umfasst, welche zum zweiten Kupplungsabschnitt (178) hin auseinander laufen, wobei mindestens je ein federelastisches Element (182a..b) in eine Gabellasche (180a, 180b) führt.

11. Kettenglied nach einem der Ansprüche 1 bis 10, **dadurch gekennzeichnet, dass** der elastisch verformbare Körperabschnitt (15, 55, 115) eine gerippte Struktur aufweist oder laschenförmig ausgebildet ist.

12. Kettenglied nach einem der Ansprüche 1 bis 11, **dadurch gekennzeichnet, dass** die beiden Kupplungsabschnitte (7, 47, 77, 107, 177; 8, 48, 78, 108, 178) Durchlässe (9a..b) zur Aufnahme einer senkrecht zur Längsachse (L) ausgerichteten Gelenkachse (23, 63, 93, 123, 193) ausbilden.

13. Förderkette (16), enthaltend eine Mehrzahl von hintereinander angeordneten und über Gelenkverbindungen in Längsrichtung (L) der Kettenglieder (20) miteinander gelenkig verbundenen Kettenglieder (20), wobei die Kettenglieder (20) jeweils einen ersten Endbereich (4) mit einem ersten Kupplungsabschnitt (7) und einen zweiten Endbereich (5) mit einem zweiten Kupplungsabschnitt (8) aufweisen, und die Kettenglieder (20) über die Kupplungsabschnitte (7, 8) miteinander gelenkig verbunden sind, wobei
wenigstens ein Kettenglied (20) ein zwischen den Endbereichen (4, 5) liegenden Zwischenbereich (6) aufweist, welcher einen elastisch verformbaren Körperabschnitt (15) umfasst, **dadurch gekennzeichnet, dass** der elastisch verformbaren Körperabschnitt (15, 55, 85, 115, 185):
- elastisch biegbar ausgebildet ist, so dass der erste Endbereich (4, 44, 74, 104, 174) relativ zum zweiten Endbereich (5, 45, 75, 105, 175) aus der Längsrichtung (L) des Grundkörpers (1, 41, 71, 101, 171) biegbar ist und/oder
- elastisch tordierbar ausgebildet ist, so dass der erste Endbereich (4, 44, 74, 104, 174) relativ zum zweiten Endbereich (5, 45, 75, 105, 175) um die Längsrichtung (L) des Grundkörpers (1, 41, 71, 101, 171) tordierbar ist.

14. Förderkette nach Anspruch 13, **dadurch gekennzeichnet, dass** die Kettenglieder (20) über die Kupplungsabschnitte (7, 8) miteinander um eine, senkrecht zur Längsachse (L) angeordneten Gelenkachse (23) schwenkbar verbunden sind und der erste Endbereich (4) relativ zum zweiten Endbereich (8) über den biegeelastischen Zwischenbereich (6) um eine senkrecht zur Gelenkachse (23) bzw. Schwenkachse (A) angeordnete Biegeachse (B) biegbar ist.

15. Förderkette nach einem der Ansprüche 13 bis 14, **dadurch gekennzeichnet, dass** die Förderkette (16) bezüglich Formgebung und vorzugsweise bezüglich Formgebung und Werkstoffen aus baugleichen Kettengliedern (20) aufgebaut ist, wobei jeweils der erste Kupplungskörper (7) eines ersten Kettengliedes (20) mit dem zweiten Kupplungskörper (8) eines benachbarten, zweiten Kettengliedes (20) ein gelenkige Verbindung eingeht.

16. Kettenglied-Grundkörper (1, 41, 71, 101, 171) eines Kettengliedes, enthaltend einen ersten Endbereich (4, 44, 74, 104, 174), welcher einen ersten Kupplungsabschnitt (7, 47, 77, 107, 177) zur gelenkigen Verbindung mit einem Kupplungsabschnitt (8, 48, 78, 108, 178) eines ersten benachbarten Kettengliedes umfasst, und mit einem zweiten Endbereich (5, 45, 75, 105, 175), welcher einen zweiten Kupplungsabschnitt (8, 48, 78, 108, 178) zur gelenkigen Verbindung mit einem Kupplungsabschnitt (7, 47, 77, 107, 177) eines zweiten benachbarten Kettengliedes umfasst, wobei
der Grundkörper (1, 41, 71, 101, 171) einen zwischen den beiden Endbereichen (4, 44, 74, 104, 174; 5, 45, 75, 105, 175) liegenden Zwischenbereich (6, 46, 76, 106, 176) aufweist, welcher einen elastisch verformbaren Körperabschnitt (15, 55, 85, 115, 185) umfasst, **dadurch gekennzeichnet, dass** der elastisch verformbaren Körperabschnitt (15, 55, 85, 115, 185):
- elastisch biegbar ausgebildet ist, so dass der erste Endbereich (4, 44, 74, 104, 174) relativ zum zweiten Endbereich (5, 45, 75, 105, 175) aus der Längsrichtung (L) des Grundkörpers (1, 41, 71, 101, 171) biegbar ist und/oder
- elastisch tordierbar ausgebildet ist, so dass der erste Endbereich (4, 44, 74, 104, 174) relativ zum zweiten Endbereich (5, 45, 75, 105, 175) um die Längsrichtung (L) des Grundkörpers (1, 41, 71, 101, 171) tordierbar ist.

17. Kettenglied-Grundkörper nach Ansprüche 16, **dadurch gekennzeichnet, dass** der Grundkörper (1, 41, 71, 101, 171) einteilig ist, und mindestens einen Kunststoffwerkstoff enthält oder aus diesem besteht.

## Claims

1. A chain link of a conveying chain, containing a base body (1, 41, 71, 101, 171) with a first end region (4, 44, 74, 104, 174) which comprises a first coupling section (7, 47, 77, 107, 177) for the articulated connection to a coupling section (8, 48, 78, 108, 178) of a first, adjacent chain link, and with a second end region (5, 45, 75, 105, 175) which comprises a second coupling section (8, 48, 78, 108, 178) for the articulated connection to a coupling section (7, 47, 77, 107, 177) of a second, adjacent chain link, wherein
the base body (1, 41, 71, 101, 171) comprises an intermediate region (6, 46, 76, 106, 176) which lies between the two end regions (4, 44, 74, 104, 174; 5, 45, 75, 105, 175) and which comprises an elastically deformable body section (15, 55, 85, 115, 185),
**characterised in that**
the elastically deformable body section (15, 55, 85, 115, 185):
- is designed in an elastically bendable manner, such that the first end region (4, 44, 74, 104, 174) relative to the second end region (5, 45, 75, 105, 175), is bendable out of the longitudinal direction (L) of the base body (1, 41, 71, 101, 171), and/or
- is designed in an elastically twistable manner, such that the first end region (4, 44, 74, 104, 174) relative to the second end region (5, 45, 75, 105, 175), is twistable about the longitudinal direction (L) of the base body (1, 41, 71, 101, 171).

2. A chain link according to claim 1, **characterised in that** the elastically deformable body section (15, 55, 85, 115, 185) consists of a plastic such as elastomer, thermoplastic or duroplastic, in particular of a fibre-reinforced plastic, or contains this.

3. A chain link according to one of the claims 1 to 2, **characterised in that** the elastically deformable body section (15, 55, 85, 115, 185) consists of a spring steel material or contains this.

4. A chain link according to one of the claims 1 to 3, **characterised in that** the elastically deformable body section (15, 55, 85, 115, 185) contains a tension element (2, 82, 182a, 182b), in particular a spring steel element, for accommodating tensile stresses, or consists of this.

5. A chain link according to claim 4, **characterised in that** the elastically deformable body section (15, 55, 85, 115, 185) contains a plastic material, in particular an elastomer material, for accommodating compressive stresses, and a tension element (2, 82, 182a, 182b) which is integrated into the plastic material, preferably with a positive fit, for accommodating tensile stresses.

6. A chain link according to one of the claims 1 to 5, **characterised in that** the elastically deformable body section (15, 55, 115) is a body section which is multi-layered in the longitudinal direction of the chain link, preferably of alternating elastically deformable segments (12a..d, 52), preferably of a plastic material, in particular of an elastomer, and rigid intermediate elements (13a..c, 53), preferably of metal or plastic.

7. A chain link according to one of the claims 1 to 6, **characterised in that** the second end region (5, 45, 75, 105, 175) comprises a fork-like, second coupling section (8, 48, 78, 108, 178) with two fork lugs (10a..b, 80a..b, 110a..b, 180a..b), which forms a receiver for the coupling section (7, 47, 77, 107, 177) of an adjacent chain link.

8. A chain link according to one of the claims 1 to 7, **characterised in that** the elastically deformable body section (85, 185) contains at least one element (82, 182a..b) of a spring-elastic material, in particular spring steel, which extends in the longitudinal direction (L) of the chain link, or consists of this element.

9. A chain link according to claim 8, **characterised in that** the at least one elastically deformable element (82, 182a..b) is integrated into the base body (71, 171) towards the first and second end region (74, 174; 75, 175), preferably with a positive fit.

10. A chain link according to one of the claims 7 to 9, **characterised in that** the elastically deformable body section (185) comprises at least two spring-elastic elements (182a..b) which extend in the longitudinal direction (L) of the chain link (70) from the first coupling section (177) in the direction of the second coupling section (178), run next to one another in the intermediate region (176) and run apart towards the second coupling section (178), wherein in each case at least one spring-elastic element (182a..b) leads into a fork lug (180a, 180b).

11. A chain link according to one of the claims 1 to 10, **characterised in that** the elastically deformable body section (15, 55, 115) has a ribbed structure or is designed in a plate-like manner.

12. A chain link according to one of the claims 1 to 11, **characterised in that** the two coupling sections (7, 47, 77, 107, 177; 8, 48, 78, 108, 178) comprise openings (9a..b) for receiving a joint pivot (23, 63, 93, 123, 193) aligned perpendicularly to the longitudinal axis (L).

13. A conveying chain (16) containing a plurality of chain links (20) which are arranged one after another and are articulately connected to one another in the longitudinal direction (L) of the chain links (20) via joint connections, wherein the chain links (20) in each case comprise a first end region (4) with a first coupling section (7) and a second end region (5) with a second coupling section (8), and the chain links (20) are articulately connected to one another via the coupling sections (7, 8), wherein
at least one chain link (20) comprises an intermediate region (6) which lies between the end regions (4, 5) and which comprises an elastically deformable body section (15),
**characterised in that**
the elastically deformable body section (15, 55, 85, 115, 185):
- is designed in an elastically bendable manner, such that the first end region (4, 44, 74, 104, 174) relative to the second end region (5, 45, 75, 105, 175), is bendable out of the longitudinal direction (L) of the base body (1, 41, 71, 101, 171), and/or
- is designed in an elastically twistable manner, such that the first end region (4, 44, 74, 104, 174) relative to the second end region (5, 45, 75, 105, 175), is twistable about the longitudinal direction (L) of the base body (1, 41, 71, 101, 171).

14. A conveying chain according to claim 13, **characterised in that** the chain links (20) via the coupling sections (7, 8) are pivotably connected to one another about a joint pivot (23) arranged perpendicularly to the longitudinal axis (L), and the first end region (4) via the bending-elastic intermediate region (6) is bendable relative to the second end region (8) about a bending axis (B) which is arranged perpendicularly to the joint pivot (23) or pivot axis (A).

15. A conveying chain according to one of the claims 13 to 14, **characterised in that** the conveying chain (16) with regard to shaping and preferably with regard to shaping and materials is constructed of constructionally equal chain links (20), wherein in each case the first coupling body (7) of a first chain link (20) assumes an articulated connection with the second coupling body (8) of an adjacent, second chain link (20).

16. A chain link base body (1, 41, 71, 101, 171) of a chain link, containing a first end region (4, 44, 74, 104, 174) which comprises a first coupling section (7, 47, 77, 107, 177) for the articulated connection to a coupling section (8, 48, 78, 108, 178) of a first adjacent chain link, and with a second end region (5, 45, 75, 105, 175) which comprises a second coupling section (8, 48, 78, 108, 178) for the articulated connection to a coupling section (7, 47, 77, 107, 177) of a second, adjacent chain link, wherein
the base body (1, 41, 71, 101, 171) comprises an intermediate region (6, 46, 76, 106, 176) which lies between the two end regions (4, 44, 74, 104, 174; 5, 45, 75, 105, 175) and which comprises an elastically deformable body section (15, 55, 85, 115, 185),
**characterised in that**
the elastically deformable body section (15, 55, 85, 115, 185):
- is designed in an elastically bendable manner, such that the first end region (4, 44, 74, 104, 174) relative to the second end region (5, 45, 75, 105, 175), is bendable out of the longitudinal direction (L) of the base body (1, 41, 71, 101, 171), and/or
- is designed in an elastically twistable manner, such that the first end region (4, 44, 74, 104, 174) relative to the second end region (5, 45, 75, 105, 175), is twistable about the longitudinal direction (L) of the base body (1, 41, 71, 101, 171).

17. A chain link base body according to claim 16, **characterised in that** the base body (1, 41, 71, 101, 171) is of one part, and contains at least one plastic material or consists of this.

## Revendications

1. Maillon pour chaîne de transport, comprenant un corps de base (1, 41, 71, 101, 171) doté d'une première partie d'extrémité (4, 44, 74, 104, 174) qui comporte une première section d'accouplement (7, 47, 77, 107, 177) permettant une liaison articulée avec une section d'accouplement (8, 48, 78, 108, 178) d'un premier maillon de chaîne voisin et une deuxième partie d'extrémité (5, 45, 75, 105, 175) qui présente une deuxième section d'accouplement (8, 48, 78, 108, 178) qui permet une liaison articulée avec une section d'accouplement (7, 47, 77, 107, 177) d'un deuxième maillon de chaîne voisin,
le corps de base (1, 41, 71, 101, 171) présentant une partie intermédiaire (6, 46, 76, 106, 176) située entre les deux parties d'extrémité (4, 44, 74, 104, 174; 5, 45, 75, 105, 175) et qui comporte une section élastiquement déformable de corps (15, 55, 85, 115, 185), **caractérisé en ce que**
la section élastiquement déformable de corps (15, 55, 85, 115, 185) est configurée de manière élastiquement déformable de telle sorte que la première partie d'extrémité (4, 44, 74, 104, 174) puisse fléchir par rapport à la deuxième partie d'extrémité (5, 45, 75, 105, 175) hors du sens de la longueur (L) du corps de base (1, 41, 71, 101, 171) et/ou est configurée de manière à pouvoir se tordre élastiquement de telle sorte que la première partie d'extrémité (4, 44, 74, 104, 174) puisse se tordre par rapport à la deuxième partie d'extrémité (5, 45, 75, 105, 175) autour du sens de la longueur (L) du corps de base (1, 41, 71, 101, 171).

2. Maillon de chaîne selon la revendication 1, **caractérisé en ce que** la section élastiquement déformable du corps (15, 55, 85, 115, 185) est constituée d'une matière synthétique, par exemple un élastomère, un thermoplastique ou un plastique thermodurcissable, en particulier une matière synthétique renforcée de fibres, ou contient cette dernière.

3. Maillon de chaîne selon l'une des revendications 1 et 2, **caractérisé en ce que** la section élastiquement déformable de corps (15, 55, 85, 115, 185) est constituée d'un matériau à base d'acier à ressort ou contient ce dernier.

4. Maillon de chaîne selon l'une des revendications 1 à 3, **caractérisé en ce que** la section élastiquement déformable de corps (15, 55, 85, 115, 185) contient un élément de traction (2, 82, 182a, 182b), en particulier un élément en acier à ressort, qui reprend les contraintes de traction, ou est constitué de cet élément.

5. Maillon de chaîne selon la revendication 4, **caractérisé en ce que** la section élastiquement déformable de corps (15, 55, 85, 115, 185) contient une matière synthétique, en particulier une matière élastomère, qui reprend des contraintes de compression, et un élément de traction (2, 82, 182a, 182b) qui reprend les contraintes de traction et qui est intégré dans la matière synthétique, de préférence en correspondance géométrique.

6. Maillon de chaîne selon l'une des revendications 1 à 5, **caractérisé en ce que** la section élastiquement déformable de corps (15, 55, 115) est une section de corps en plusieurs couches dans le sens de la longueur du maillon de chaîne, de préférence en segments élastiquement déformables (12a..d, 52), de préférence en matière synthétique et en particulier en élastomère, alternant avec des éléments intermédiaires rigides (13a..c, 53), de préférence en métal ou en matière synthétique.

7. Maillon de chaîne selon l'une des revendications 1 à 6, **caractérisé en ce que** la deuxième partie d'extrémité (5, 45, 75, 105, 175) comporte une deuxième section d'accouplement (8, 48, 78, 108, 178) en forme de fourche présentant deux dents de fourche (10a..b, 80a..b, 110a..b, 180a..b) qui forment un logement pour la section d'accouplement (7, 47, 77, 107, 177) d'un maillon de chaîne voisin.

8. Maillon de chaîne selon l'une des revendications 1 à 7, **caractérisé en ce que** la section élastiquement déformable de corps (85, 185) contient au moins un élément (82, 182a..b) qui s'étend dans le sens de la longueur (L) du maillon de chaîne, en un matériau élastique, en particulier en acier à ressort, ou est constitué de ce dernier.

9. Maillon de chaîne selon la revendication 8, **caractérisé en ce que** le ou les éléments élastiquement déformables (82, 182a..b) sont intégrés dans le corps de base (71, 171), de préférence en correspondance géométrique, en direction de la première et de la deuxième partie d'extrémité (74, 174; 75, 175).

10. Maillon de chaîne selon l'une des revendications 7 à 9, **caractérisé en ce que** la section élastiquement déformable de corps (185) comporte au moins deux éléments élastiques (182a..b) qui s'étendent dans le sens de la longueur (L) du maillon de chaîne (70) entre la première section d'accouplement (177) et la deuxième section d'accouplement (178) tel que dans la partie intermédiaire (176) entre celles-ci ils s'étendent côté à côté, et qui conduisent vers la deuxième section d'accouplement (178) en s'écartant l'un de l'autre, avec au moins un élément élastique (182a..b) conduisant dans chaque dent de fourche (180a, 180b).

11. Maillon de chaîne selon l'une des revendications 1 à 10, **caractérisé en ce que** la section élastiquement déformable de corps (15, 55, 115) présente une structure nervurée ou est réalisée en forme de patte.

12. Maillon de chaîne selon l'une des revendications 1 à 11, **caractérisé en ce que** les deux sections d'accouplement (7, 47, 77, 107, 177; 8, 48, 78, 108, 178) forment des passages (9a..b) qui permettent de reprendre un axe d'articulation (23, 63, 93, 123, 193) orienté perpendiculairement à l'axe longitudinal (L).

13. Chaîne de transport (16) comprenant plusieurs maillons de chaîne (20) disposés les uns derrière les autres et reliés de manière articulée les uns aux autres dans le sens de la longueur (L) des maillons de chaîne (20) par des liaisons articulées, les maillons de chaîne (20) présentant chacun une première partie d'extrémité (4) dotée d'une première section d'accouplement (7) et une deuxième partie d'extrémité (5) dotée d'une deuxième section d'accouplement (8), les maillons de chaîne (20) étant raccordés les uns aux autres de manière articulée par les sections d'accouplement (7, 8),
au moins un maillon de chaîne (20) présentant une partie intermédiaire (6) située entre les parties d'extrémité (4, 5) et qui comporte une section élastiquement déformable de corps (15),
**caractérisée en ce que**
la section élastiquement déformable de corps (15, 55, 85, 115, 185) est configurée de manière élastiquement déformable de telle sorte que la première partie d'extrémité (4, 44, 74, 104, 174) puisse fléchir par rapport à la deuxième partie d'extrémité (5, 45, 75, 105, 175) hors du sens de la longueur (L) du corps de base (1, 41, 71, 101, 171) et/ou est configurée de manière à pouvoir se tordre élastiquement de telle sorte que la première partie d'extrémité (4, 44, 74, 104, 174) puisse se tordre par rapport à la deuxième partie d'extrémité (5, 45, 75, 105, 175) autour du sens de la longueur (L) du corps de base (1, 41, 71, 101, 171).

14. Chaîne de transport selon la revendication 13,
**caractérisée en ce que** les maillons de chaîne (20) sont reliés les uns aux autres de manière pivotante par l'intermédiaire des sections d'accouplement (7, 8), autour d'un axe d'articulation (23) disposé perpendiculairement à l'axe longitudinal (L), la première partie d'extrémité (4) pouvant fléchir par rapport à la deuxième partie d'extrémité (8) par l'intermédiaire de la partie intermédiaire (6) élastique en flexion, autour d'un axe de flexion (B) disposé perpendiculairement par rapport à l'axe d'articulation (23) ou axe de pivotement (A).

15. Chaîne de transport selon l'une des revendications 13 et 14, **caractérisée en ce que** la chaîne de transport (16) est constituée de maillons de chaîne (20) de structure identique en termes de façonnage et de préférence de façonnage et de matériau, le premier corps d'accouplement (7) d'un premier maillon de chaîne (20) entrant en liaison articulée avec le deuxième corps d'accouplement (8) d'un deuxième maillon de chaîne (20) voisin.

16. Corps de base (1, 41, 71, 101, 171) de maillon de chaîne, contenant une première partie d'extrémité (4, 44, 74, 104, 174) comprenant une première section d'accouplement (7, 47, 77, 107, 177) permettant une liaison articulée avec une section d'accouplement (8, 48, 78, 108, 178) d'un premier maillon de chaîne voisin et une deuxième partie d'extrémité (5, 45, 75, 105, 175) qui comporte une deuxième section d'accouplement (8, 48, 78, 108, 178) permettant une liaison articulée avec une section d'accouplement (7, 47, 77, 107, 177) d'un deuxième maillon de chaîne voisin,
le corps de base (1, 41, 71, 101, 171) présentant une partie intermédiaire (6, 46, 76, 106, 176) située entre les deux parties d'extrémité (4, 44, 74, 104, 174; 5, 45, 75, 105, 175) et qui comporte une section élastiquement déformable de corps (15, 55, 85, 115, 185), **caractérisé en ce que**
la section élastiquement déformable de corps (15, 55, 85, 115, 185) est configurée de manière élastiquement déformable de telle sorte que la première partie d'extrémité (4, 44, 74, 104, 174) puisse fléchir par rapport à la deuxième partie d'extrémité (5, 45, 75, 105, 175) hors du sens de la longueur (L) du corps de base (1, 41, 71, 101, 171) et/ou est configurée de manière à pouvoir se tordre élastiquement de telle sorte que la première partie d'extrémité (4, 44, 74, 104, 174) puisse se tordre par rapport à la deuxième partie d'extrémité (5, 45, 75, 105, 175) autour du sens de la longueur (L) du corps de base (1, 41, 71, 101, 171).

17. Corps de base de maillon de chaîne selon la revendication 16, **caractérisé en ce que** le corps de base (1, 41, 71, 101, 171) est réalisé d'une seule pièce et contient au moins une matière synthétique ou en est constitué.
